(19) Europäisches Patentamt
European Patent Office
Office européen des brevets

(11) **EP 4 047 537 B1**

(12) **EUROPEAN PATENT SPECIFICATION**

(45) Date of publication and mention
of the grant of the patent:
**17.06.2026 Bulletin 2026/25**

(51) International Patent Classification (IPC):
**G06Q 20/38** (2012.01)     **G06Q 20/40** (2012.01)
**G06Q 20/32** (2012.01)

(21) Application number: **20894403.3**

(52) Cooperative Patent Classification (CPC):
**G06Q 20/3278; G06Q 20/3223; G06Q 20/3224;
G06Q 20/3821; G06Q 20/40145; G06Q 20/40155**

(22) Date of filing: **10.11.2020**

(86) International application number:
**PCT/CN2020/127820**

(87) International publication number:
**WO 2021/104010 (03.06.2021 Gazette 2021/22)**

(54) **PAYMENT METHOD AND ELECTRONIC DEVICE**

ZAHLUNGSVERFAHREN UND ELEKTRONISCHE VORRICHTUNG

PROCÉDÉ DE PAIEMENT ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2019 CN 201911167725
03.07.2020 CN 202010632442**

(43) Date of publication of application:
**24.08.2022 Bulletin 2022/34**

(73) Proprietor: **Huawei Technologies Co., Ltd.
Longgang
Shenzhen, Guangdong 518129 (CN)**

(72) Inventors:
• **YAO, Zhendong
Shenzhen, Guangdong 518129 (CN)**

• **SHU, Haw-Wei
Shenzhen, Guangdong 518129 (CN)**
• **YANG, Yuxin
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 105 869 037     CN-A- 107 027 102
CN-A- 108 122 105     CN-A- 109 767 148
KR-B1- 101 809 748     US-A1- 2015 371 271
US-A1- 2016 112 839     US-A1- 2019 317 177

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims priority to Chinese Patent Application No. 201911167725.9, filed with the China National Intellectual Property Administration on November 25, 2019 and entitled "SECURE PAYMENT SYSTEM AND METHOD", which is incorporated herein by reference in its entirety.

This application claims priority to Chinese Patent Application No. 202010632442.3, filed with the China National Intellectual Property Administration on July 3, 2020 and entitled "PAYMENT METHOD AND ELECTRONIC DEVICE", which is incorporated herein by reference in its entirety.

## TECHNICAL FIELD

This application relates to the field of electronic devices, and more specifically, to a payment method and an electronic device.

## BACKGROUND

In addition to cash payment, there are many quick payment methods in the market. In a common payment method, a payer makes payment by using a payer device, and correspondingly, a payee receives payment by using a payee device, so that an amount in an account of the payer can be transferred to an account of the payee.

KR 101 809 748 B1 discloses a mobile terminal configured to use short-range communications to determine the distance and direction of nearby devices, and to display such devices according to their distance and direction relative to the mobile terminal. If the displayed device relates to a product, the user may select it on the mobile terminal's user interface and initiate an exchange of discount information between the mobile terminal and the device. The distance and direction determination may be performed by the mobile terminal based on time of arrival (ToA) and a plurality of antennas.

US 2016/112839 A1 discloses a mobile terminal configured to perform a distance or direction determination using: angle of arrival (AoA) employing three antennas, time differences, or a navigation diagram. It also discloses a payment method based on the distance or direction determination by the mobile terminal.

US 2019/317177 A1 discloses an AoA determination by a mobile terminal using a planar arrangement comprising at least 3 antennas to determine azimuth and elevation angles of the other device(s). It further discloses: a multi-planar antenna arrangement or combining phase measurements for the planar antenna arrangement with motion sensor data to disambiguate the azimuth and/or elevation angles; displaying other devices relative to device and, in response to the distance and/or azimuth and elevation of an other device being below a threshold, initiating or prompting user to confirm an information exchange with the other device.

## SUMMARY

This application provides a payment method and an electronic device, to provide a new secure payment mode.

According to a first aspect, a payment method includes: A first device displays a first interface in response to a first operation of a user, where the first interface includes location information and identification information of one or more electronic devices, and the location information of the one or more electronic devices is determined by using an ultra-wideband UWB protocol or a Bluetooth low energy BLE protocol. The first device determines a second device from the one or more electronic devices in response to a second operation of the user on the first interface, where when the first device is a payer device, the second device is a payee device, or when the first device is a payee device, the second device is a payer device. The first device transacts with the second device.

In this application, a correct payee device is determined based on location information of an electronic device around a payer device, or a correct payer device is determined based on location information of an electronic device around a payee device, so that the payer device can communicate with the payee device to exchange transaction information. This may provide a new payment method.

In this new payment method, for example, after a transaction connection is established between the payer device and the payee device, identification information of a payer account and/or identification information of a payee account may be exchanged in the background. This helps reduce a quantity of times that the user enters transaction information. This helps improve interaction efficiency of transaction information.

This new payment method further helps reduce exposure of identification information, to further improve transaction security.

For example, this new payment method may be performed when a distance between the payer device and the payee device is short. This helps reduce a degree of constraint on orientations of the payer device and the payee device.

Optionally, the first device sorts the one or more electronic devices based on the location information of the one or more electronic devices.

In this application, location information of an electronic device around the payer device is presented to the user, so that the user can select a correct payee device based on a relative location of the nearby device. Alternatively, location information of an electronic device around the payee device is presented to the user, so that the user can select a correct payer device based on a relative location of the nearby device. This helps improve accuracy of determining the payee device or the payer device by the user, and further helps improve transaction security.

With reference to the first aspect, in some implementations of the first aspect, the first interface includes a device orientation diagram, and the device orientation diagram displays distances between the first device and the one or more electronic devices, and azimuths of the one or more electronic devices relative to the first device.

In this application, for example, an electronic device that is closer to the first device may be considered as a candidate device of the payee device or the payer device based on distances between the first device and a plurality of electronic devices. For another example, an electronic device in a known orientation may be considered as a candidate device of the payee device or the payer device based on azimuths of a plurality of electronic devices.

In this application, a relative location of an electronic device around the first device may be intuitively and vividly presented by using the device orientation diagram. This helps improve human-machine interaction.

In this application, the first device may determine location information of an electronic device by using a plurality of communications protocols.

With reference to the first aspect, in some implementations of the first aspect, that the first device transacts with the second device includes: The first device displays a third interface, where the third interface includes transaction information of the current transaction, and the transaction information includes at least one of the following: a payment method, a discount, a payment amount, and identification information of the second device. The first device completes the transaction with the second device in response to a third operation of the user on the third interface.

With reference to the first aspect, in some implementations of the first aspect, before the first device displays the third interface, the method further includes: The first device sends a transaction process message to the second device, where the transaction process message is used to request the second device to send the transaction information to the first device.

In this application, the second device sends the transaction information to the first device, so that the user can perform fewer operations on the first device.

With reference to the first aspect, in some implementations of the first aspect , before the first device determines the second device from the one or more electronic devices in response to the second operation of the user on the first interface, the method further includes: updating the location information of the one or more electronic devices on the first interface in response to a fourth operation of the user, where the fourth operation enables the second device to meet at least one of the following: The second device is in a target orientation of the first device; and a distance between the second device and the first device is the shortest.

In this application, the payer device may determine an electronic device that meets a condition as the payee device, or the payee device may determine an electronic device that meets a condition as the payer device. This helps reduce an amount of information used for determining by the user, and helps improve human-machine interaction.

In this application, the payer device is probably close to the payee device, and the payee device is probably in a target orientation of the payer device. Therefore, the first device determines an electronic device that meets a condition as the second device, to help quickly and accurately determine the second device.

With reference to the first aspect, in some implementations of the first aspect, the target orientation includes direct front.

In this application, the user may adjust an orientation of the payee device relative to the payer device to direct front by moving or rotating the first device, so that the first device can quickly determine an electronic device in direct front as the second device. This provides a new and flexible manner of determining the payee device.

With reference to the first aspect, in some implementations of the first aspect, before the first device displays the first interface, the payment method further includes: The first device advertises a device seek message. The first device receives a target device seek response message for the device seek message through at least three receive antennas, where the target device seek response message is sent by a target electronic device in the one or more electronic devices. The first device determines location information of the target electronic device based on a time difference for receiving the target device seek response message by the at least three receive antennas.

In this application, determining a relative location of an electronic device by using a time difference for receiving a message may have high accuracy.

With reference to the first aspect, the payment method further includes: The first device updates location information of the second device; and when the location information of the second device meets a preset condition, the first device stops transacting with the second device.

In this application, when location information of the payee device is abnormal, the first device may stop the transaction at any time. This helps improve transaction reliability and security.

With reference to the first aspect, in some implementations of the first aspect, the preset condition includes: A distance between the first device and the second device is longer than a first preset threshold. According to the first aspect, the preset condition includes a variation of an azimuth of the second device relative to the first device with time is greater than a second preset threshold.

In this application, when the payee device is far away from the payer device, or a variation of an azimuth of the payee device relative to the payer device is large, transaction may be instable. In this case, the transaction is stopped, to help improve transaction security. In addition, relative locations of the payee device and the payer device may change within a small range. Therefore, a location relationship between the payer device and the payee device is flexible to some extent.

With reference to the first aspect, in some implementations of the first aspect, the second operation is a tap operation on the second device.

In this application, the user may indicate the correct second device to the first device by using a simple gesture.

With reference to the first aspect, in some implementations of the first aspect, the identification information of the electronic device includes icon information of the electronic device and a name of a logged-in payee account on the electronic device.

With reference to the first aspect, in some implementations of the first aspect, the first interface is a payment interface or a checkout interface.

In this application, a secure payment process may be triggered by entering the payment interface or the checkout interface. When the payment interface or the checkout interface is not entered, a payment-related message may not be monitored. This helps reduce power consumption. According to a second aspect, an electronic device is provided, including one or more processors and one or more memories. The one or more memories store one or more computer programs, and the one or more computer programs include instructions. When the instructions are executed by the one or more processors, the electronic device is enabled to perform the following steps: displaying a first interface in response to a first operation of a user, where the first interface includes location information and identification information of one or more electronic devices, and the location information of the one or more electronic devices is determined by using an ultra-wideband UWB protocol or a Bluetooth low energy BLE protocol; determining a second device from the one or more electronic devices in response to a second operation of the user on the first interface, where when the electronic device is a payer device, the second device is a payee device, or when the electronic device is a payee device, the second device is a payer device; and transacting with the second device.

With reference to the second aspect, in some implementations of the second aspect, the first interface includes a device orientation diagram, and the device orientation diagram displays distances between the electronic device and the one or more electronic devices, and azimuths of the one or more electronic devices relative to the electronic device.

With reference to the second aspect, in some implementations of the second aspect, when the instructions are executed by the one or more processors, the electronic device is enabled to specifically perform the following steps: displaying a third interface, where the third interface includes transaction information of the current transaction, and the transaction information includes at least one of the following: a payment method, a discount, a payment amount, and identification information of the second device; and completing the transaction with the second device in response to a third operation of the user on the third interface.

With reference to the second aspect, in some implementations of the second aspect, when the instructions are executed by the one or more processors, the electronic device is enabled to further perform the following step: before displaying the third interface, sending a transaction process message to the second device, where the transaction process message is used to request the second device to send the transaction information to the electronic device.

With reference to the second aspect, in some implementations of the second aspect, when the instructions are executed by the one or more processors, the electronic device is enabled to further perform the following step: before determining the second device from the one or more electronic devices in response to the second operation of the user on the first interface, updating the location information of the one or more electronic devices on the first interface, where the fourth operation enables the second device to meet at least one of the following: The second device is in a target orientation of the electronic device; and a distance between the second device and the electronic device is the shortest.

With reference to the second aspect, in some implementations of the second aspect, the target orientation includes direct front.

With reference to the second aspect, in some implementations of the second aspect, when the instructions are executed by the one or more processors, the electronic device is enabled to further perform the following steps: before displaying the first interface, advertising a device seek message; receiving a target device seek response message for the device seek message through at least three receive antennas, where the target device seek response message is sent by a target electronic device in the one or more electronic devices; and determining location information of the target nearby electronic device based on a time difference for receiving the target device seek response message by the at least three receive antennas.

With reference to the second aspect, in some implementations of the second aspect, when the instructions are executed by the one or more processors, the electronic device is enabled to further perform the following steps: updating location information of the second device; and when the location information of the second device meets a preset condition, stopping transacting with the second device.

With reference to the second aspect, in some implementations of the second aspect, the preset condition includes: A distance between the electronic device and the second device is longer than a first preset threshold. According to the second aspect, the preset condition includes a variation of an azimuth of the second device relative to the electronic device with time is greater than a second preset threshold.

With reference to the second aspect, in some implementations of the second aspect, the second operation is a tap operation on the second device.

With reference to the second aspect, in some implementations of the second aspect, the identification information of the electronic device includes icon information of the electronic device and a name of a logged-in payee account on the electronic device.

With reference to the second aspect, in some implementations of the second aspect, the first interface is a payment interface or a checkout interface.

According to a third aspect, a secure payment method is provided, including: A first device determines location information of one or more electronic devices around the first device, where the location information of the one or more electronic devices is used to determine a second device from the at least one electronic device, and when the first device is a payer device, the second device is a payee device, or when the first device is a payee device, the second device is a payer device. The first device transacts with the second device.

With reference to the third aspect, in some implementations of the third aspect, the location information of the electronic device includes at least one of the following: a distance between the first device and the electronic device, and an azimuth of the electronic device relative to the first device.

With reference to the third aspect, in some implementations of the third aspect, before the first device transacts with the second device, the payment method further includes: determining, based on the location information of the one or more electronic devices, an electronic device that meets a preset condition in the one or more electronic devices as the second device.

In this application, the payer device may determine an electronic device that meets a condition as the payee device, or the payee device may determine an electronic device that meets a condition as the payer device. This helps reduce an amount of information used for determining by the user, and helps improve human-machine interaction.

With reference to the third aspect, in some implementations of the third aspect, the preset condition includes at least one of the following: a distance to the first device is the shortest; and an electronic device is in a target orientation of the first device.

With reference to the third aspect, in some implementations of the third aspect, before the first device determines the location information of the one or more electronic devices around the first device, the payment method further includes: The first device advertises a device seek message. The first device receives one or more device seek response messages for the device seek message. The one or more device seek response messages are sent by the one or more electronic devices. The one or more device seek response messages one-to-one correspond to the one or more electronic devices. The one or more device seek response messages include a target device seek response message. The target device seek response message corresponds to a target electronic device in the one or more electronic devices. The target device seek response message includes location information of the target electronic device. The location information of the target electronic device is determined by the target electronic device. The determining location information of one or more electronic devices around the first device includes: The first device determines the location information of the target electronic device based on the target device seek response message.

In this application, the second device may determine a location relationship between the second device and the first device, and feed back the location relationship to the first device, so that the first device can quickly obtain the location information of the second device relative to the first device.

With reference to the third aspect, in some implementations of the third aspect, that a first device determines location information of one or more electronic devices around the first device includes: The first device determines the location information of the one or more electronic devices by using an ultra-wideband (ultra wide band, UWB) protocol or a Bluetooth low energy (Bluetooth low energy, BLE) protocol.

With reference to the third aspect, in some implementations of the third aspect, before the first device determines the location information of the one or more electronic devices around the first device, the payment method further includes: The first device displays a payment interface or a checkout interface.

According to a fourth aspect, an electronic device is provided, including one or more processors and one or more memories. The one or more memories store one or more computer programs. The one or more computer programs include instructions, and when the instructions are executed by the one or more processors, the electronic device is enabled to perform the following steps: determining location information of one or more nearby electronic devices around the electronic device, where the location information of the one or more nearby electronic devices is used to determine a second device from the at least one nearby electronic device; and transacting with the second device.

With reference to the fourth aspect, in some implementations of the fourth aspect, the location information of the nearby electronic device includes at least one of the following: a distance between the electronic device and the nearby electronic device, and an azimuth of the nearby electronic device relative to the electronic device.

With reference to the fourth aspect, in some implementations of the fourth aspect, when the instructions are executed by the one or more processors, the electronic device is enabled to further perform the following step: before transacting with the second device, determining a nearby electronic device that meets a preset condition in the one or more nearby electronic devices as the second device based on the location information of the one or more nearby electronic devices.

With reference to the fourth aspect, in some implementations of the fourth aspect, the preset condition includes at least one of the following: a distance to the electronic device is the shortest; and a nearby electronic device is in a target orientation of the electronic device.

With reference to the fourth aspect, in some implementations of the fourth aspect, the target orientation includes direct front.

With reference to the fourth aspect, in some implementations of the fourth aspect, when the instructions are executed by the one or more processors, the electronic device is enabled to further performed the following steps: before determining the location information of the one or more nearby electronic devices around the electronic device, advertising a device seek message; and receiving one or more device seek response messages for the device seek message. The one or more device seek response messages are sent by the one or more nearby electronic devices. The one or more device seek response messages one-to-one correspond to the one or more nearby electronic devices. The one or more device seek response messages include a target device seek response message. The target device seek response message corresponds to a target nearby electronic device in the one or more nearby electronic devices. The target device seek response message includes location information of the target nearby electronic device. The location information of the target nearby electronic device is determined by the target nearby electronic device. When the instructions are executed by the one or more processors, the electronic device is enabled to specifically perform the following step: determining the location information of the target nearby electronic device based on the target device seek response message.

With reference to the fourth aspect, in some implementations of the fourth aspect, when the instructions are executed by the one or more processors, the electronic device is enabled to specifically perform the following step: determining the location information of the one or more nearby electronic devices by using an ultra-wideband UWB protocol or a Bluetooth low energy BLE protocol.

With reference to the fourth aspect, in some implementations of the fourth aspect, when the instructions are executed by the one or more processors, the electronic device is enabled to further perform the following step: displaying a payment interface before determining the location information of the one or more nearby electronic devices around the electronic device.

According to a fifth aspect, a nonvolatile computer-readable storage medium is provided, including computer instructions. When the computer instructions are run on an electronic device, the electronic device is enabled to perform the method according to any one of the possible implementations of the first aspect or the third aspect.

According to a sixth aspect, a computer program product including instructions is provided. When the computer program product is run on an electronic device, the electronic device is enabled to perform the method according to any one of the possible implementations of the first aspect or the third aspect.

According to a seventh aspect, a chip is provided. The chip includes a processor and a data interface. The processor reads, through the data interface, instructions stored in a memory, to perform the method according to any one of the possible implementations of the first aspect or the third aspect.

Optionally, in an implementation, the chip may further include the memory. The memory stores instructions. The processor is configured to execute the instructions stored in the memory. When the instructions are executed, the processor is configured to perform the method according to any one of the possible implementations of the first aspect or the third aspect.

## BRIEF DESCRIPTION OF DRAWINGS

FIG. 1 is a schematic diagram of a hardware structure of an electronic device according to an embodiment of this application;

FIG. 2 is a schematic diagram of a hardware structure of an electronic device according to an embodiment of this application;

FIG. 3 is a schematic diagram of an application scenario according to an embodiment of this application;

FIG. 4 is a schematic diagram of interaction between devices according to an embodiment of this application;

FIG. 5 is a schematic diagram of interaction between devices according to an embodiment of this application;

FIG. 6 is a schematic diagram of a hardware structure of a wireless communications module according to an embodiment of this application;

FIG. 7 is a schematic diagram of a hardware structure of a wireless communications module according to an embodiment of this application;

FIG. 8 is a schematic diagram of a hardware structure of a wireless communications module according to an embodiment of this application;

FIG. 9 is a schematic diagram of interaction between devices according to an embodiment of this application;

FIG. 10 is a schematic diagram of interaction between devices according to an embodiment of this application;

FIG. 11 is a schematic diagram of determining location information according to an embodiment of this application;

FIG. 12 is a schematic diagram of an azimuth according to an embodiment of this application;

FIG. 13 is a schematic diagram of a hardware structure of a wireless communications module according to an embodiment of this application;

FIG. 14 is a schematic diagram of a hardware structure of a wireless communications module according to an embodiment of this application;

FIG. 15 is a schematic diagram of a hardware structure of a wireless communications module according to an embodiment of this application;

FIG. 16 is a schematic diagram of interaction between devices according to an embodiment of this application;

FIG. 17 is a schematic diagram of determining location information according to an embodiment of this application;

FIG. 18 shows a Bluetooth angle-of-arrival positioning protocol framework according to an embodiment of this application;

FIG. 19 is a schematic diagram of a structure of a Bluetooth antenna system architecture according to an embodiment of this application;

FIG. 20 is a schematic diagram of a structure of a Bluetooth chip system architecture according to an embodiment of this application;

FIG. 21 is a schematic diagram of interaction in a Bluetooth angle-of-arrival positioning standard protocol according to an embodiment of this application;

FIG. 22 shows a graphical user interface for secure payment according to an embodiment of this application;

FIG. 23 shows a graphical user interface for secure payment according to an embodiment of this application;

FIG. 24 is a schematic diagram of interaction between devices according to an embodiment of this application;

FIG. 25 is a schematic diagram of interaction between devices according to an embodiment of this application;

FIG. 26 is a schematic diagram of interaction between devices according to an embodiment of this application;

FIG. 27 is a schematic diagram of interaction between devices according to an embodiment of this application;

FIG. 28 is a schematic diagram of interaction between devices according to an embodiment of this application;

FIG. 29 shows a graphical user interface for secure payment according to an embodiment of this application;

FIG. 30 shows a graphical user interface for secure payment according to an embodiment of this application;

FIG. 31 shows a graphical user interface for secure payment according to an embodiment of this application;

FIG. 32 shows a graphical user interface for secure payment according to an embodiment of this application;

FIG. 33 is a schematic diagram of an application scenario according to an embodiment of this application;

FIG. 34 shows a graphical user interface for secure payment according to an embodiment of this application;

FIG. 35 is a schematic flowchart of a secure payment method according to an embodiment of this application;

FIG. 36 is a schematic flowchart of a secure payment method according to an embodiment of this application;

FIG. 37 is a schematic flowchart of a secure payment method according to an embodiment of this application; and

FIG. 38 is a schematic flowchart of a secure payment method according to an embodiment of this application.

## DESCRIPTION OF EMBODIMENTS

The following clearly describes the technical solutions in embodiments of this application. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The following describes an electronic device provided in embodiments of this application, a user interface for such an electronic device, and embodiments for using such an electronic device. In some embodiments, the electronic device may be a portable electronic device, for example, a mobile phone, a tablet computer, or a video player that further includes other functions such as a personal digital assistant and/or a music player. An example embodiment of the portable electronic device includes but is not limited to a portable electronic device using iOS®, Android®, Microsoft®, or another operating system. The portable electronic device may alternatively be another portable electronic device such as a laptop computer (Laptop). It should be further understood that in some other embodiments, the electronic device may alternatively be a desktop computer, a television (or a Vision), a notebook computer, a smart speaker, a smart camera apparatus, or the like, but not a portable electronic device.

First, an example electronic device 100 provided in the following embodiments of this application is described.

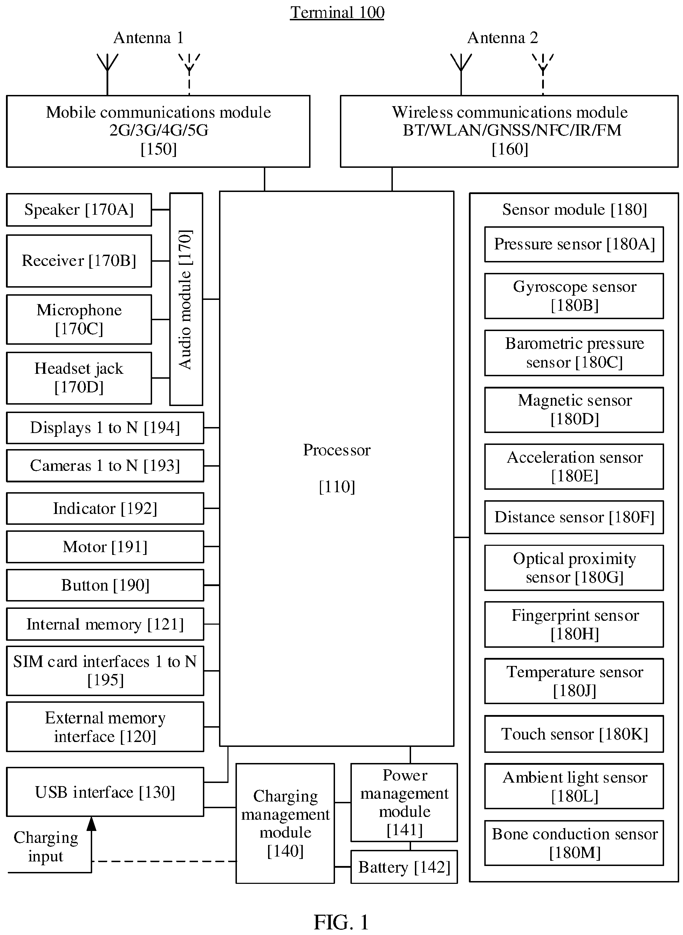

FIG. 1 is a schematic diagram of a structure of the electronic device 100.

The electronic device 100 is used as an example below to describe embodiments in detail. It should be understood that the electronic device 100 shown in FIG. 1 is merely an example, and the electronic device 100 may have more or fewer components than those shown in FIG. 1, or two or more components may be combined, or different component configurations may be used. Various components shown in the figure may be implemented in hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than the components shown in the figure, some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device 100. The controller may generate an operation control signal based on an instruction operation code and a time sequence signal, to control to read instructions and execute instructions.

The memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communications module 160 through a PCM bus interface. In some embodiments, the audio module 170 may alternatively transfer an audio signal to the wireless communications module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be configured to transmit data between the electronic device 100 and a peripheral device, or may be configured to connect to a headset, to play audio by using the headset. The interface may be further configured to connect to another electronic device such as an AR device.

It may be understood that an interface connection relationship between the modules illustrated in embodiments of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transfer a processed electromagnetic wave to the modem processor for demodulation. The mobile communications module 150 may further amplify a signal modulated by the modem processor, and convert the signal to an electromagnetic wave for radiation through the antenna 1. In some embodiments, at least some functional modules of the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another function module

The wireless communications module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communications module 160 may be one or more components integrating at least one communication processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT. a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini light-emitting diode (mini light-emitting Diode, mini-LED), a micro light-emitting diode (micro light-emitting diode, micro-LED), a micro organic light-emitting diode (micro organic light-emitting diode, micro-OLED), quantum dot light-emitting diodes (quantum dot light emitting diodes, QLED), or the like. In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external memory card, for example, a micro SD card, to extend a storage capability of the electronic device 100. The external memory card communicates with the processor 110 through the external memory interface 120, to implement a data storage function, for example, to store files such as music and a video in the external memory card.

The internal memory 121 may be configured to store computer-executable program code. The executable program code includes instructions. The processor 110 performs various function applications and data processing of the electronic device 100 by running the instructions stored in the internal memory 121. The internal memory 121 may include a program storage area and a data storage area. The program storage area may store an operating system, an application (for example, a sound playing function or an image playing function) required by at least one function, and the like. The data storage area may store data (for example, audio data, and a phone book) and the like created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording functions by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to perform image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 can detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, and may detect magnitude and a direction of gravity when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (light emitting diode, LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically turn off a screen for power saving. The optical proximity sensor 180G may also be used in a smart cover mode or a pocket mode to automatically perform screen unlocking or locking.

The ambient light sensor 180L is configured to sense ambient light luminance. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194. The touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to produce an incoming call vibration prompt and a touch vibration feedback. For example, touch operations performed on different applications (for example, photo taking and audio playing) may correspond to different vibration feedback effects. For touch operations performed on different areas of the display 194, the motor 191 may also correspond to different vibration feedback effects. Different application scenarios (for example, a time reminder scenario, an information receiving scenario, an alarm clock scenario, and a game scenario) may also correspond to different vibration feedback effects. A touch vibration feedback effect may alternatively be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type, or may be of different types. The SIM card interface 195 is compatible with different types of SIM cards. The SIM card interface 195 is also compatible to an external storage card. The electronic device 100 interacts with a network through the SIM card, to implement functions such as calling and data communication. In some embodiments, the electronic device 100 uses an embedded SIM card (embedded-SIM, eSIM). The eSIM card may be embedded into the electronic device 100, and cannot be separated from the electronic device 100.

The electronic device 100 may further include a magnetometer (not shown in the figure), which may also be referred to as an electronic compass or a compass, and may be configured to detect intensity and a direction of a magnetic field.

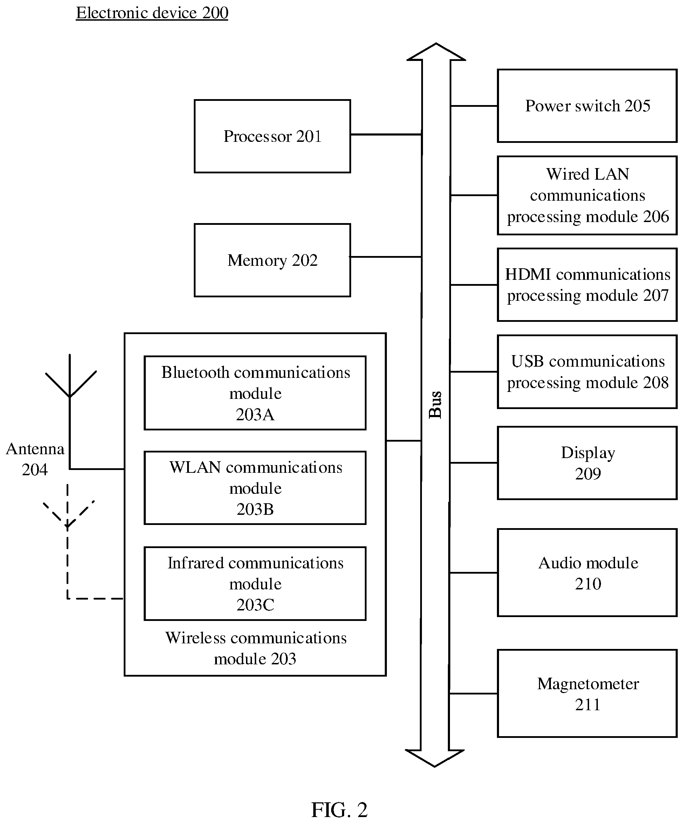

FIG. 2 is a schematic diagram of a structure of an example electronic device 200 according to an embodiment of this application.

The following uses the electronic device 200 as an example to specifically describe embodiments. It should be understood that the electronic device 200 shown in FIG. 2 is merely an example, and the electronic device 200 may have more or fewer components than those shown in FIG. 2, or two or more components may be combined, or different component configurations may be used. Various components shown in the figure may be implemented in hardware, software, or a combination of hardware and software that includes one or more signal processing and/or application-specific integrated circuits.

As shown in FIG. 2, the electronic device 200 may include a processor 201, a memory 202, a wireless communications module 203, an antenna 204, a power switch 205, a wired local area network (local area network, LAN) communications processing module 206, a high definition multimedia interface (high definition multimedia interface, HDMI) communications processing module 207, a USB communications processing module 208, a display 209, and an audio module 210.

The processor 201 may be configured to read and execute computer-readable instructions. During specific implementation, the processor 201 may mainly include a controller, a calculator, and a register. The controller is mainly responsible for decoding an instruction, and sends a control signal for an operation corresponding to the instruction. The calculator is mainly responsible for storing a register operand, an intermediate operation result, and the like that are temporarily stored during instruction execution. During specific implementation, a hardware architecture of the processor 201 may be an application specific integrated circuit (application specific integrated circuit, ASIC) architecture, a microprocessor without interlocked piped stages (microprocessor without interlocked piped stages, MIPS) architecture, an advanced reduced instruction set computing machine (Advanced reduced instruction set computing machine, ARM) architecture, a net processor (net processor, NP) architecture, or the like.

In some embodiments, the processor 201 may be configured to parse a signal received by the wireless communications module 203 and/or the wired LAN communications processing module 206, for example, a seek request advertised by the electronic device 100. The processor 201 may be configured to perform a corresponding processing operation based on a parsing result, for example, generate a seek response.

In some embodiments, the processor 201 may be further configured to generate a signal to be externally sent by the wireless communications module 203 and/or the wired LAN communications processing module 206, for example, a Bluetooth advertising signal or a beacon signal.

The memory 202 is coupled to the processor 201, and is configured to store various software programs and/or a plurality of sets of instructions. During specific implementation, the memory 202 may include a high-speed random access memory, and may also include a nonvolatile memory such as one or more disk storage devices, a flash device, or another nonvolatile solid-state storage device. The memory 202 may store an operating system, for example, an embedded operating system such as uCOS, VxWorks, or RTLinux. The memory 202 may further store a communications program. The communications program may be used to communicate with the electronic device 100, one or more servers, or a nearby device.

The wireless communications module 203 may include one or more of a Bluetooth communications module 203A, a WLAN communications module 203B, and an infrared communications module 204C. The Bluetooth communications module 203A may include a classic Bluetooth (BT) module and a Bluetooth low energy (Bluetooth low energy, BLE) module.

In some embodiments, one or more of the Bluetooth communications module 203A, the WLAN communications module 203B, and the infrared communications module 204C may obtain, through listening, a signal transmitted by another device (for example, the electronic device 100), for example, a seek request or a scan signal; may send a response signal, for example, a seek response or a scan response, so that the another device (for example, the electronic device 100) can discover the electronic device 200; establish a wireless communication connection to the another device (for example, the electronic device 100); and communicate with the another device (for example, the electronic device 100) by using one or more wireless communications technologies such as Bluetooth, a WLAN, or infrared.

In some other embodiments, one or more of the Bluetooth communications module 203A, the WLAN communications module 203B, and the infrared communications module 203C may alternatively transmit a signal, for example, a Bluetooth advertising signal or a beacon signal, so that another device (for example, the electronic device 100) can discover the electronic device 200; establish a wireless communication connection to the another device (for example, the electronic device 100); and communicate with the another device (for example, the electronic device 100) by using one or more wireless communications technologies such as Bluetooth, a WLAN, or infrared.

The wireless communications module 203 may further include a cellular mobile communications module (not shown). The cellular mobile communications processing module may communicate with another device (for example, a server) by using a cellular mobile communications technology.

A wireless communications function of the electronic device 200 may be implemented by the antenna 204, the Bluetooth communications module 203, the modem processor, and the like.

The antenna 204 may be configured to transmit and receive electromagnetic wave signals. Each antenna in the electronic device 200 may be configured to cover one or more communication bands. Different antennas may be further multiplexed, to improve antenna utilization. For example, an antenna of the WLAN communications module 203B may be multiplexed as an antenna of the Bluetooth communications module 203A. In some other embodiments, an antenna may be used in combination with a tuning switch.

In some embodiments, the Bluetooth communications module 203A may have one or more antennas. When the Bluetooth communications module 203A has three or more antennas, the electronic device 200 may measure an angle of arrival (angle of arrival, AoA) of a Bluetooth signal sent by the electronic device 100.

The power switch 205 may be configured to control a power supply to supply power to the electronic device 200.

The wired LAN communications processing module 206 may be configured to communicate with another device in a same LAN through a wired LAN, and may be further configured to connect to a WAN through the wired LAN, and may communicate with a device in the WAN.

The HDMI communications processing module 207 may be configured to communicate with another device through an HDMI interface (not shown).

The USB communications processing module 208 may be configured to communicate with another device through a USB interface (not shown).

The display 209 may be configured to display an image, a video, and the like. The display 209 may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light emitting diodes (quantum dot emitting diodes, QLED) display, or the like.

The audio module 210 may be configured to output an audio signal through an audio output interface, so that the electronic device 200 can support audio playing. The audio module may be further configured to receive audio data through an audio input interface. The electronic device 200 may be a media play device such as a television.

In some embodiments, the electronic device 200 may further include a serial interface such as an RS-232 interface. The serial interface may be connected to another device, for example, an audio loudspeaker device such as a speaker, so that the display collaborates with the audio loudspeaker device to play audio and a video.

It may be understood that the structure shown in FIG. 2 does not constitute a specific limitation on the electronic device 200. In some other embodiments of this application, the electronic device 200 may include more or fewer components than the components shown in the figure, some components may be combined, or some components may be split, or different component arrangements may be used. The components shown in the figure may be implemented in hardware, software, or a combination of software and hardware.

The electronic device 200 may further include a magnetometer 211, which may also be referred to as an electronic compass or a compass, and may be configured to detect intensity and a direction of a magnetic field.

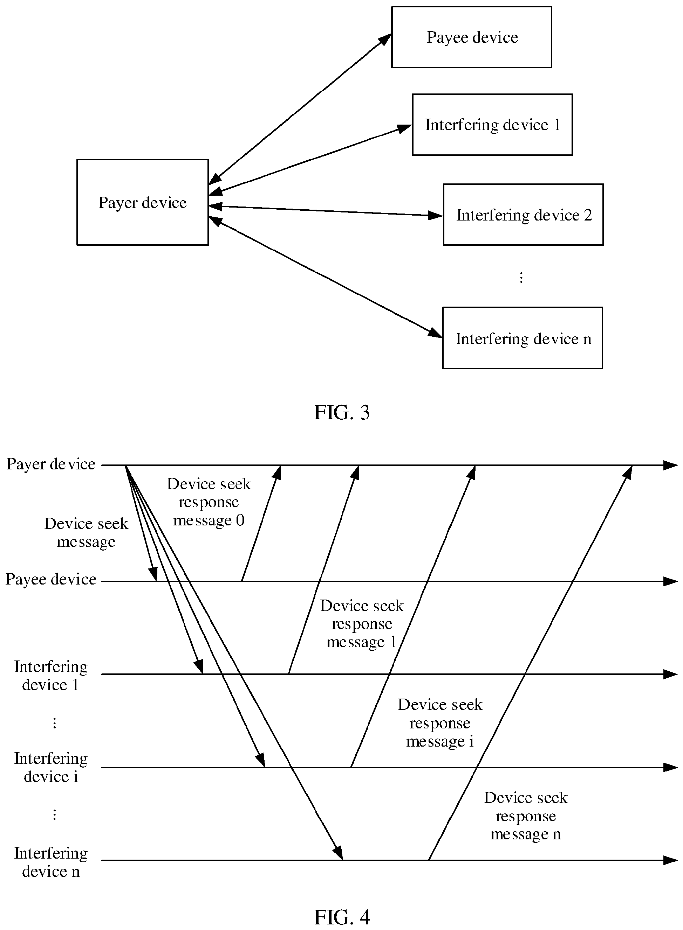

FIG. 3 shows an application scenario of secure payment. In this application scenario, there may be a payer device used for payment and a payee device used for payment receipt. In addition, in this application scenario, there may be one or more interfering devices, for example, an interfering device 1, an interfering device 2, ..., and an interfering device n shown in FIG. 3. The payer device needs to determine a correct payee device from a plurality of electronic devices around the payer device, to avoid paying an amount to an interfering device. For example, the payer device may be the electronic device 100 shown in FIG. 1. For example, the payee device and the one or more interfering devices may be the electronic device 200 shown in FIG. 2.

An amount that can be used for payment may be stored in a logged-in payer account on the payer device, for example, money, tokens, or bonus points that can be used for payment. In this application, for example, a payment type may include transfer, consumption, and a red packet. The payer device may wirelessly communicate with the payee device and the one or more interfering devices. In addition, the payer device should transfer an amount to the payee device and avoid transferring an amount to an interfering device.

The payer device may trigger a secure payment process, and advertise a device seek message, to obtain information about another electronic device around the payer device. In other words, the device seek message is used to search for or seek the payee device. Correspondingly, an electronic device around the payer device may send a device seek response message for the device seek message.

As shown in FIG. 4, the payee device may receive the device seek message advertised by the payer device, and send a device seek response message 0 for the device seek message to the payer device. An interfering device 1 may receive the device seek message advertised by the payer device, and send a device seek response message 1 for the device seek message to the payer device. An interfering device i may receive the device seek message advertised by the payer device, and send a device seek response message i for the device seek message to the payer device, where i is an integer and 1<i<n. An interfering device n may receive the device seek message advertised by the payer device, and send a device seek response message n for the device seek message to the payer device.

It may be understood that the application scenario shown in FIG. 3 does not constitute a specific limitation on an application scenario in embodiments of this application. In some other embodiments of this application, there may be more or fewer electronic devices than those shown in the figure around the payer device.

In a possible case, there may be only the payee device around the payer device. The payee device may send a device seek response message for the device seek message to the payer device. Correspondingly, the payer device may receive only the device seek response message sent by the payee device.

In another possible case, there may be only one or more interfering device around the payer device. For example, the payee device has not enabled a wireless communications module, and the payer device cannot establish a communication connection to the payee device. The interfering device may send a device seek response message for the device seek message to the payer device. Correspondingly, the payer device receives one or more device seek response messages. The one or more device seek response messages one-to-one correspond to the one or more interfering devices.

In an example, the device seek (SEEK_REQ) message may include a first instruction command word (command, CMD), a first timestamp (timestamp) (cmd_stamp), a unique identifier (unique identifier, UID) (cmd_uid) of the payer device, and a name (name) (cmd_name) of the payer device, and a first true random number (cmd_rand).

The first instruction command word may indicate content of a device seek instruction. For example, content of the instruction command word may be to request a device that receives the device seek instruction feeds back device information of the device to the payer device. The first instruction command word may be, for example, a command word of the device seek instruction.

The first timestamp may indicate a moment at which the payer device sends the device seek message. The first timestamp may be determined based on a clock of the payer device.

The unique identifier of the payer device may be used by another electronic device to identify the payer device.

The name of the payer device may be used by another electronic device to quickly identify the payer device.

The first true random number may be used for security verification. Optionally, the first true random number may be used to verify validity of the payee device. A true random number sent by the payer device each time may be different. In other words, the true random number sent by the payer device each time may be regenerated.

For example, the payer device sends a true random number A to the payee device. The payee device may convert the true random number A into a new true random number B according to a special algorithm, and send the true random number B to the payer device. The payer device may receive the true random number B. The payer device may convert, according to the special algorithm, the previously sent true random number A into a true random number C, and match the true random number C with the true random number B sent by the payee device. If the matching succeeds, the payer device may consider the payee device as an authorized device.

In an example, the device seek response (SEEK_RES) message may include a second instruction command word (command, CMD), a second timestamp (timestamp) (rsp_stamp), a device unique identifier (unique identifier, UID) (rsp_uid), a device name (rsp_name), and a second true random number (rsp_rand). The second instruction command word may be, for example, a command word of a device seek response instruction.

The second instruction command word may indicate content of the device seek response instruction. For example, content of the device seek response instruction may be to feed back to a received device seek instruction.

The second timestamp may indicate a moment at which the device seek response message is sent. Alternatively, the second timestamp may indicate a moment at which the device seek message is received. The second timestamp may be determined based on a clock of the payee device.

The device unique identifier may be used by the payer device to identify a device (for example, the payee device or an interfering device) that sends the device seek response message.

The device name may be used by the payer device to quickly identify a device that sends the device seek response message.

The second true random number may be used for security verification. A true random number sent by the payee device each time may be different. In other words, the true random number sent by the payee device may be regenerated. The foregoing has described a specific implementation of performing security verification by using a true random number, and details are not described herein again.

Optionally, if the payer device does not receive the device seek response message within a first preset time period (for example, REQ_TIMEOUT), the payer device may send a new device seek message.

Optionally, if the payer device does not receive the device seek response message within a second preset time period (for example, DISCOVERY_TIMEOUT), the payer device may stop performing the secure payment method. The second preset time period is longer than the first preset time period.

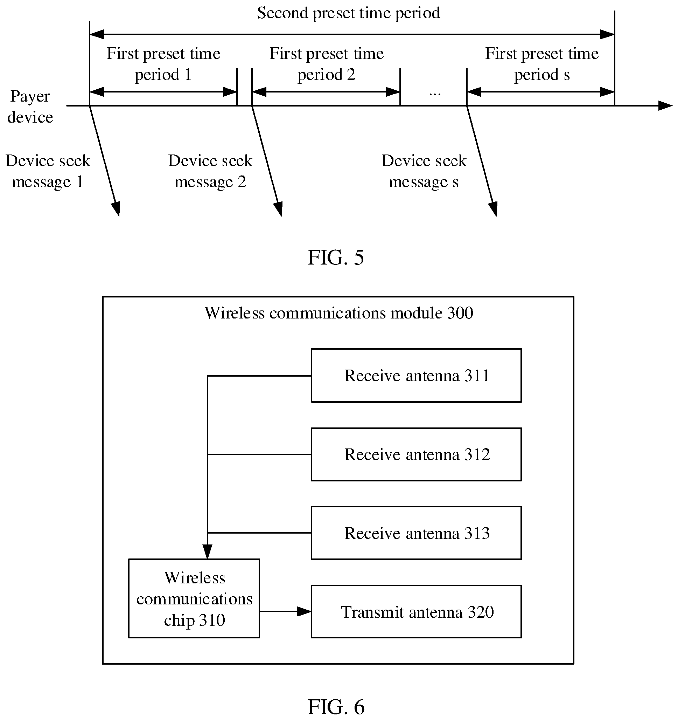

As shown in FIG. 5, the payer device triggers a secure payment process, and sends a device seek message 1. If the payer device does not receive any device seek response message within a first preset time period 1, the payer device may send a device seek message 2. Then, the payer device still does not receive any device seek response message within a first preset time period 2. The payer device may continue to send a device seek message. If the payer device still does not receive any device seek response message within a first preset time period s after sending a device seek message s, and still does not receive any device seek response message within a second preset time period, the payer device may stop sending a device seek message. A sum of the first preset time period 1, the first preset time period 2, ..., and the first preset time period s may be shorter than or equal to the second preset time period, and s may be an integer greater than 1. Optionally, the payer device may support a half-duplex communications protocol.

As described above, the payer device may receive the at least one device seek response message sent by the payee device and/or the one or more interfering devices. The payer device may determine a relative location of at least one electronic device around the payer device based on the at least one received device seek response message. The at least one electronic device one-to-one corresponds to the at least one device seek response message. With reference to FIG. 6, the following describes a wireless communications module 300 that may be configured to determine a relative location of a nearby electronic device. In an example, the payer device may include the wireless communications module 300. In an example, the payee device and/or the interfering device may include the wireless communications module 300.

FIG. 6 shows the wireless communications module 300 according to an embodiment of this application. For example, the wireless communications module 300 may be the wireless communications module 160 shown in FIG. 1. For another example, the wireless communications module 300 may be the wireless communications module 203 shown in FIG. 2. A wireless communications chip 310 may communicate with another electronic device or a wireless communications module of another electronic device.

The wireless communications module 300 may include the wireless communications chip 310, a receive antenna 311, a receive antenna 312, a receive antenna 313, and a transmit antenna 320. The receive antenna 311, the receive antenna 312, and the receive antenna 313 each may be configured to receive a radio signal, and the transmit antenna 320 may be configured to transmit a signal.

The wireless communications chip 310 may be, for example, an ultra-wideband (ultra wide band, UWB) control and radio frequency chip or a BLE control and radio frequency chip. The wireless communications chip 310 may process a signal received by the receive antenna 311, the receive antenna 312, or the receive antenna 313. The wireless communications chip 310 may control the transmit antenna 320 to transmit a signal. For example, the wireless communications chip 310 may receive instructions from the processor 110 shown in FIG. 1, control the transmit antenna 320 to transmit a signal, and forward a signal received by the receive antenna 311, the receive antenna 312, or the receive antenna 313 to the processor 110. For another example, the wireless communications chip 310 may receive instructions from the processor 201 shown in FIG. 2, control the transmit antenna 320 to transmit a signal, and forward a signal received by the receive antenna 311, the receive antenna 312, or the receive antenna 313 to the processor 201.

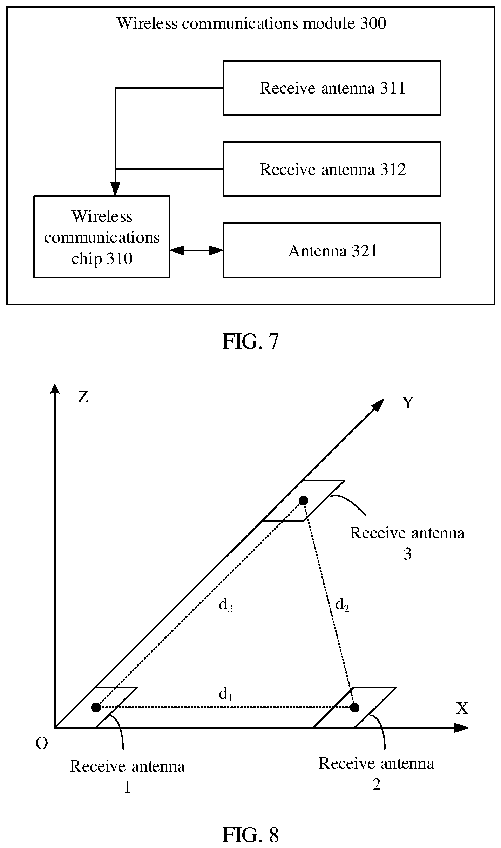

FIG. 7 shows another wireless communications module 300 according to an embodiment of this application. For example, the wireless communications module 300 may be the wireless communications module 160 shown in FIG. 1. For another example, the wireless communications module 300 may be the wireless communications module 203 shown in FIG. 2. A wireless communications chip 310 may communicate with another electronic device or a wireless communications module of another electronic device.

The wireless communications module 300 may include the wireless communications chip 310, a receive antenna 311, a receive antenna 312, and an antenna 321. The receive antenna 311, the receive antenna 312, and the antenna 321 each may be configured to receive a radio signal. The antenna 321 may be further configured to transmit a signal. That is, the receive antenna and the transmit antenna may be multiplexed. The wireless communications chip 310 may process a signal received by the receive antenna 311, the receive antenna 312, or the antenna 321. The wireless communications chip 310 may control the antenna 321 to transmit a signal.

FIG. 8 shows disposing locations of three receive antennas. For example, the three receive antennas may be the receive antenna 311, the receive antenna 312, and the receive antenna 313 in FIG. 6. For another example, the three receive antennas may be the receive antenna 311, the receive antenna 312, and the antenna 321 in FIG. 7. The three receive antennas may be disposed on a same plane (an XOY plane shown in FIG. 8). A distance d between different receive antennas may meet:

$$d \leq \frac{C}{2f},$$

where

C is a propagation speed of light in a vacuum and is about $3.0 \times 10^8$ m/s, and f is an operating frequency of the antennas. In an example, d is between $\frac{C}{4f}$ and $\frac{C}{2f}$.

For example, in the UWB, f may be 6.5 GHz. Therefore, the distance d between different antennas may meet:

$$d \leq \frac{3.0 \times 10^8}{2 \times 6.5 \times 10^9} \times 100 \approx 2.3 \text{ cm}.$$

As shown in FIG. 8, a distance between a receive antenna 1 and a receive antenna 2 is $d_1$, a distance between the receive antenna 2 and a receive antenna 3 is $d_2$, and a distance between the receive antenna 1 and the receive antenna 3 is $d_3$. When the receive antenna 1, the receive antenna 2, and the receive antenna 3 all operate in 6.5 GHz, $d_1 \leq 2.3$ cm, $d_2 \leq 2.3$ cm, and $d_3 \leq 2.3$ cm.

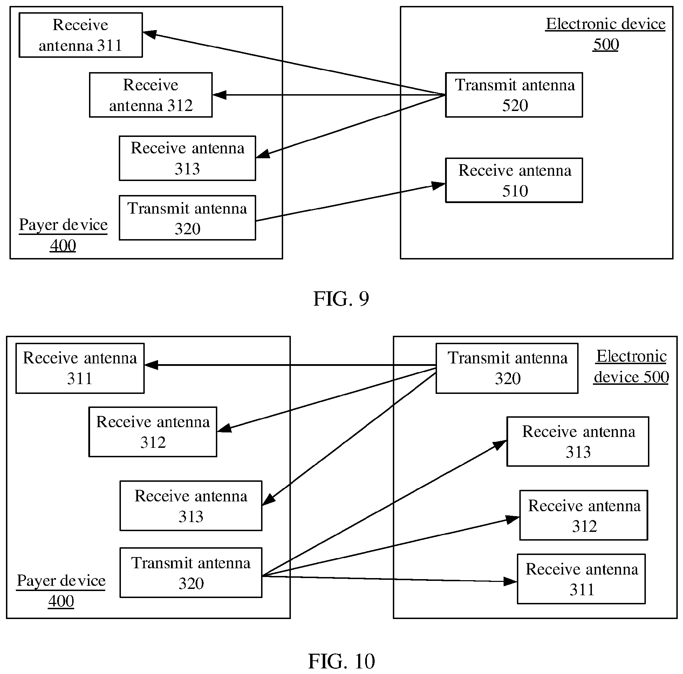

As shown in FIG. 9, a payer device 400 may include the receive antenna 311, the receive antenna 312, the receive antenna 313. and the transmit antenna 320 shown in FIG. 6. Another hardware structure of the payer device 400 will come to mind to a person skilled in the art having the benefit of the guidance presented in the embodiments shown in FIG. 6 to FIG. 8. For example, the payer device 400 may include the receive antenna 311, the receive antenna 312, and the antenna 321 shown in FIG. 7. Therefore, it should be understood that this application is not limited to the specific embodiments disclosed.

The transmit antenna 320 of the payer device 400 may advertise the device seek message shown in FIG. 4. An electronic device 500 around the payer device 400 may receive the device seek message. For example, the electronic device 500 may be the payee device or the interfering device shown in FIG. 3 or FIG. 4. The electronic device 500 may include a receive antenna 510 and a transmit antenna 520. The receive antenna 510 of the electronic device 500 may receive the device seek message sent by the payer device 400. The transmit antenna 520 of the electronic device 500 may send the device seek response message shown in FIG. 4 to the payer device. Another hardware structure of the electronic device 500 will come to mind to a person skilled in the art having the benefit of the guidance presented in the embodiments shown in FIG. 6 to FIG. 8. For example, the electronic device 500 may include more receive antennas, as shown in FIG. 10.

The payer device 400 may separately receive, through the receive antenna 311, the receive antenna 312, and the receive antenna 313, the device seek response message sent by the electronic device 500. Because the receive antenna 311, the receive antenna 312, and the receive antenna 313 are disposed at different locations in the payer device 400, moments at which the receive antenna 311, the receive antenna 312, and the receive antenna 313 receive the device seek response message may reflect a location of the electronic device 500 relative to the payer device 400.

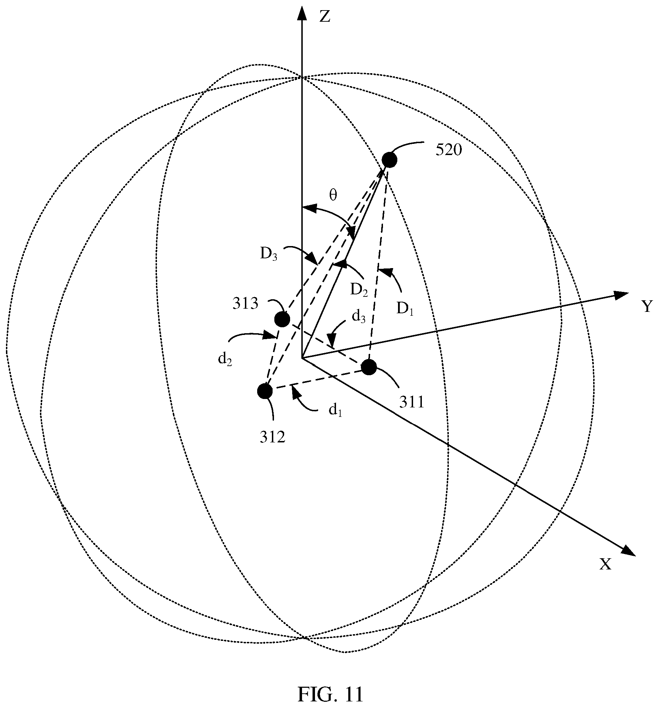

As shown in FIG. 11, it is assumed that duration from a moment at which the transmit antenna 520 transmits the device seek response message to a moment at which the receive antenna 311 receives the device seek response message is $t_1$, duration from a moment at which the transmit antenna 520 transmits the device seek response message to a moment at which the receive antenna 312 receives the device seek response message is $t_2$, and duration from a moment at which the transmit antenna 520 transmits the device seek response message to a moment at which the receive antenna 313 receives the device seek response message is $t_3$. Usually, a signal speed is fixed, and is assumed to be v. A distance $D_1$ between the receive antenna 311 and the transmit antenna 520 may be $t_1 \cdot v$. A distance $D_2$ between the receive antenna 312 and the transmit antenna 520 may be $t_2 \cdot v$. A distance $D_3$ between the receive antenna 313 and the transmit antenna 520 may be $t_3 \cdot v$. In an example, $D_1$, $D_2$, and $D_3$ may be determined according to a UWB single-sided two-way ranging algorithm. In another example, $D_1$, $D_2$, and $D_3$ may be measured according to a BLE angle of arrival (angle of arrival, AoA) measurement technology.

It is assumed that a distance between the receive antenna 311 and the receive antenna 312 is $d_1$, a distance between the receive antenna 312 and the receive antenna 313 is $d_2$, and a distance between the receive antenna 311 and the receive antenna 313 is $d_3$. The payer device 400 may determine location information of the electronic device 500 relative to the payer device 400 based on $D_1$, $D_2$, $D_3$, $d_1$, $d_2$, and $d_3$. The location information may include, for example, a distance between the electronic device 500 and the payer device 400, and an azimuth $\theta$ of the electronic device 500 relative to the payer device 400.

The distance between the electronic device 500 and the payer device 400 may be, for example, an average value of $D_1$, $D_2$, and $D_3$.

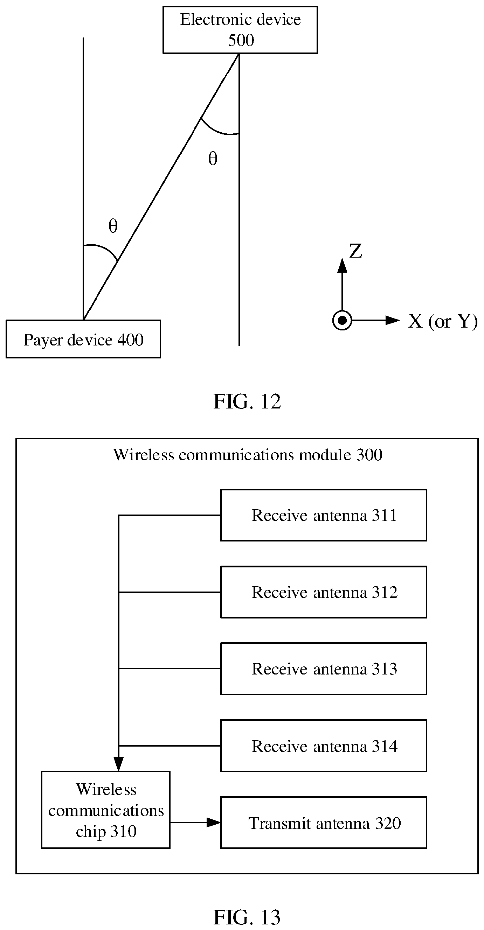

The following describes a possible definition of the azimuth $\theta$. It is assumed that an XOY plane shown in FIG. 11 is disposed in parallel with a cover of the payer device 400 (that is, the receive antenna 311, the receive antenna 312, and the receive antenna 313 are all disposed on a plane that is disposed in parallel with the cover of the payer device 400). In this case, a Z-axis direction shown in FIG. 11 may be a direction perpendicular to the cover of the payer device. As shown in FIG. 12, the azimuth $\theta$ of the electronic device 500 relative to the payer device 400 may be an included angle between a connection line from the electronic device 500 to the payer device 400 and the Z axis (that is, an included angle between the connection line from the electronic device 500 to the payer device 400 and a direction perpendicular to the cover of the payer device).

When the payer device 400 includes only three antennas configured to receive a signal, and the three antennas are all disposed on a plane that is disposed in parallel with the cover of the payer device 400, the payer device 400 possibly cannot determine whether the electronic device 500 is in front of or behind the payer device. For example, coordinates of the transmit antenna 520 of the electronic device 500 in the coordinate system shown in FIG. 11 may be $(x_0, y_0, z_0)$. Assuming that the transmit antenna 520 is located at $(x_0, y_0, -z_0)$ in the coordinate system, a distance between the transmit antenna 520 and the receive antenna 311 is still $D_1$, a distance between the transmit antenna 520 and the receive antenna 312 is still $D_2$, and a distance between the transmit antenna 520 and the receive antenna 313 is still $D_3$.

Therefore, embodiments of this application provide another wireless communications module 300, as shown in FIG. 13. The wireless communications module 300 may include a wireless communications chip 310, a receive antenna 311, a receive antenna 312, a receive antenna 313, a receive antenna 314, and a transmit antenna 320. The receive antenna 311, the receive antenna 312, the receive antenna 313, and the receive antenna 314 each may be configured to receive a radio signal. The transmit antenna 320 may be configured to transmit a signal. The wireless communications chip 310 may process a signal received by the receive antenna 311, the receive antenna 312, the receive antenna 313, or the receive antenna 314. The wireless communications chip 310 may control the transmit antenna 320 to transmit a signal.

Compared with the wireless communications module 300 shown in FIG. 6, the wireless communications module 300 shown in FIG. 13 includes more receive antennas. To be specific, the wireless communications module 300 further includes the receive antenna 314. The wireless communications module 300 includes more receive antennas, so that the wireless communications module 300 can more accurately determine a relative location of a nearby device.

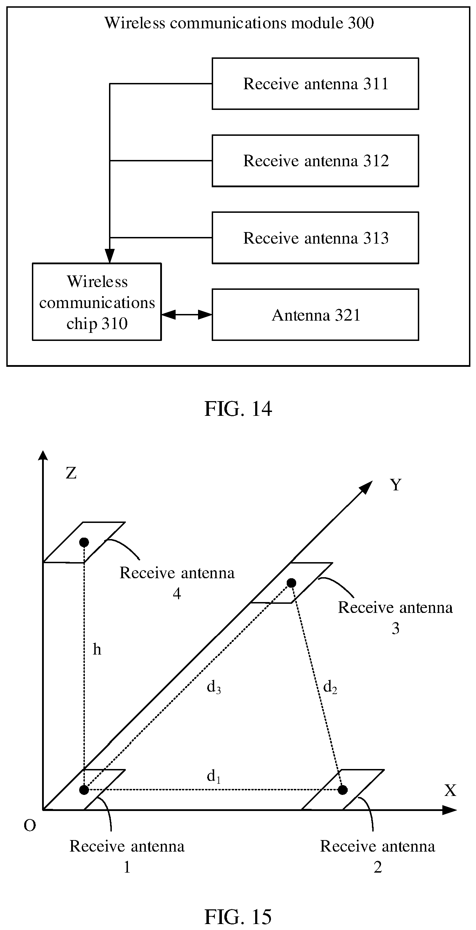

FIG. 14 shows another wireless communications module 300 according to an embodiment of this application. The wireless communications module 300 may include a wireless communications chip 310, a receive antenna 311, a receive antenna 312, a receive antenna 313, and an antenna 321. The receive antenna 311, the receive antenna 312, the receive antenna 313, and the antenna 321 each may be configured to receive a radio signal. The antenna 321 may be further configured to transmit a signal. The wireless communications chip 310 may process a signal received by the receive antenna 311, the receive antenna 312, the receive antenna 313, or the antenna 321. The wireless communications chip 310 may control the antenna 321 to transmit a signal. That is, the receive antenna and the transmit antenna may be multiplexed.

FIG. 15 shows disposing locations of four receive antennas. For example, the four receive antennas may be the receive antenna 311, the receive antenna 312, the receive antenna 313, and the receive antenna 314 in FIG. 13. For another example, the four receive antennas may be the receive antenna 311, the receive antenna 312, the receive antenna 313, and the antenna 321 in FIG. 14.

A receive antenna 1, a receive antenna 2, and a receive antenna 3 in FIG. 15 may be located on a same plane (an XOY plane shown in FIG. 15). A distance between the plane on which the receive antenna 1, the receive antenna 2, and the receive antenna 3 are located and a receive antenna 4 is h (that is, the receive antenna 4 is located outside the XOY plane). Herein, h may meet:

$$h \leq \frac{C}{2f},$$

where
C is a propagation speed of light in a vacuum and is about $3.0 \times 10^8$ m/s, and f is an operating frequency of the antennas. In an example, h is between $\frac{C}{4f}$ and $\frac{C}{2f}$.

In addition, a distance d between different receive antennas may meet:

$$d \leq \frac{C}{2f},$$

where
C is a propagation speed of light in a vacuum and is about $3.0 \times 10^8$ m/s, and f is an operating frequency of the antennas. In an example, d is between $\frac{C}{4f}$ and $\frac{C}{2f}$.

For example, in the UWB, f may be 6.5 GHz. A distance between the receive antenna 1 and the receive antenna 2 is $d_1$, a distance between the receive antenna 2 and the receive antenna 3 is $d_2$, and a distance between the receive antenna 1 and the receive antenna 3 is $d_3$. The distance between the receive antenna 4 and the plane on which the receive antenna 1, the receive antenna 2, and the receive antenna 3 are located is h. When the receive antenna 1, the receive antenna 2, the receive antenna 3, and the receive antenna 4 all operate in 6.5 GHz, $d_1 \leq 2.3$ cm, $d_2 \leq 2.3$ cm, $d_3 \leq 2.3$ cm, and $h \leq 2.3$cm.

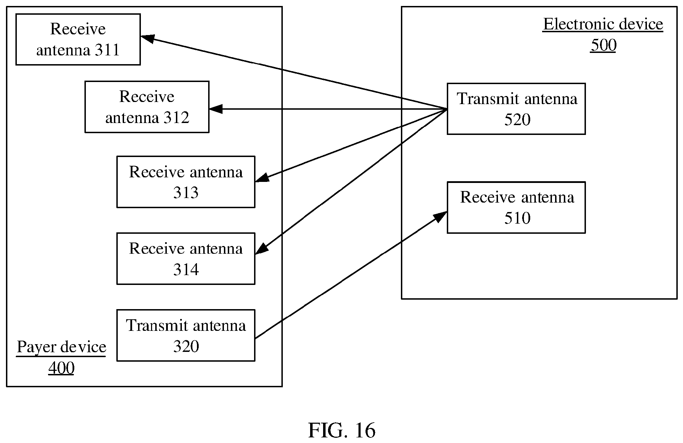

As shown in FIG. 16, a payer device 400 may include the receive antenna 311, the receive antenna 312, the receive antenna 313, the receive antenna 314, and the transmit antenna 320 shown in FIG. 13. Another hardware structure of the payer device 400 will come to mind to a person skilled in the art having the benefit of the guidance presented in the embodiments shown in FIG. 13 to FIG. 15. For example, the payer device 400 may include the receive antenna 311, the receive antenna 312, the receive antenna 313, and the antenna 321 shown in FIG. 14. It should be understood that this application is not limited to the specific embodiments disclosed.

An electronic device 500 around the payer device 400 may communicate with the payer device 400. The transmit antenna 320 of the payer device 400 may advertise the device seek message shown in FIG. 4. A receive antenna 510 of the electronic device 500 may receive the device seek message sent by the payer device 400. A transmit antenna 520 of the electronic device 500 may send the device seek response message shown in FIG. 4 to the payer device. Another hardware structure of the payer device 400 will come to mind to a person skilled in the art having the benefit of the guidance presented in the embodiments shown in FIG. 6 to FIG. 15. For example, the electronic device 500 may include more receive antennas.

The payer device 400 may separately receive, through the receive antenna 311, the receive antenna 312, the receive antenna 313, and the receive antenna 314, the device seek response message sent by the electronic device 500.

Because the receive antenna 311, the receive antenna 312, the receive antenna 313, and the receive antenna 314 are disposed at different locations in the payer device 400, the receive antenna 311, the receive antenna 312, the receive antenna 313, and the receive antenna 314 receive the device seek response message at different moments.

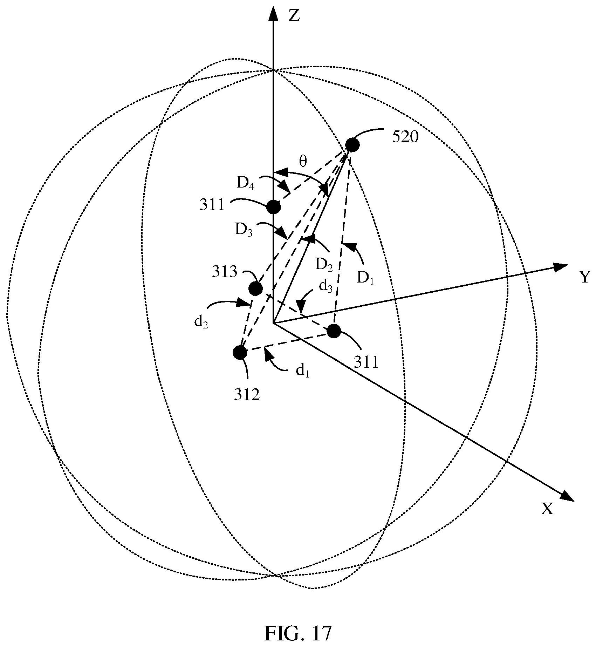

As shown in FIG. 17, it is assumed that duration from a moment at which the transmit antenna 520 transmits the device seek response message to a moment at which the receive antenna 311 receives the device seek response message is $t_1$, duration from a moment at which the transmit antenna 520 transmits the device seek response message to a moment at which the receive antenna 312 receives the device seek response message is $t_2$, duration from a moment at which the transmit antenna 520 transmits the device seek response message to a moment at which the receive antenna 313 receives the device seek response message is $t_3$, and duration from a moment at which the transmit antenna 520 transmits the device seek response message to a moment at which the receive antenna 314 receives the device seek response message is $t_4$. Usually, a signal speed is fixed, and is assumed to be v. A distance $D_1$ between the receive antenna 311 and the transmit antenna 520 may be $t_1 \cdot v$. A distance $D_2$ between the receive antenna 312 and the transmit antenna 520 may be $t_2 \cdot v$. A distance $D_3$ between the receive antenna 313 and the transmit antenna 520 may be $t_3 \cdot v$. A distance $D_4$ between the receive antenna 314 and the transmit antenna 520 may be $t_4 \cdot v$. In an example, $D_1$, $D_2$, $D_3$, and $D_4$ may be determined according to a UWB single-sided two-way ranging algorithm. In another example, $D_1$, $D_2$, $D_3$, and $D_4$ may be measured according to a BLE angle of arrival (angle of arrival, AoA) measurement technology.

It is assumed that a distance between the receive antenna 311 and the receive antenna 312 is $d_1$, a distance between the receive antenna 312 and the receive antenna 313 is $d_2$, a distance between the receive antenna 311 and the receive antenna 313 is $d_3$, and a distance between the receive antenna 314 and a plane (XOY plane) on which the receive antenna 311, the receive antenna 312, and the receive antenna 313 are located is h. The payer device 400 may determine location information of the electronic device 500 relative to the payer device 400 based on $D_1$, $D_2$, $D_3$, $D_4$, $d_1$, $d_2$, $d_3$, and h. The location information may include, for example, a distance between the electronic device 500 and the payer device 400, and an azimuth $\theta$ of the electronic device 500 relative to the payer device 400.

Coordinates of the transmit antenna 520 of the electronic device 500 in the coordinate system shown in FIG. 17 may be $(x_0, y_0, z_0)$. Assuming that the transmit antenna 520 is located at another location in the coordinate system, the following conditions cannot be met at the same time: A distance between the transmit antenna 520 and the receive antenna 311 is still $D_1$, a distance between the transmit antenna 520 and the receive antenna 312 is still $D_2$, and a distance between the transmit antenna 520 and the receive antenna 313 is still $D_3$, and a distance between the transmit antenna 520 and the receive antenna 314 is still $D_4$. It can be learned from this that using the four receive antennas shown in FIG. 15 in the payer device 400 can more accurately determine a relative location of the electronic device 500.

In this application, the payer device 400 may include fewer receive antennas. For example, the payer device 400 should include at least one receive antenna, to determine the distance between the payer device 400 and the electronic device 500. For another example, the payer device 400 should include at least two receive antennas, to determine the azimuth of the electronic device 500 relative to the payer device 400. Fewer receive antennas indicate lower precision of determining a relative location of a nearby device.

In this application, a location of an electronic device may be measured according to an angle-of- arrival (Angle-of-Arrival, AoA) technology. The following describes the AoA technology.

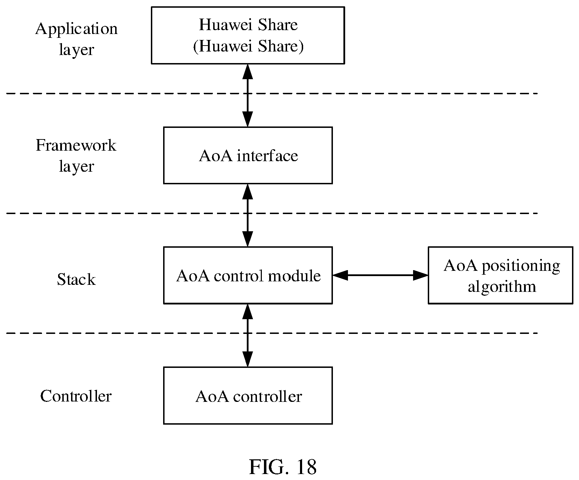

As shown in FIG. 18, embodiments of this application provide a Bluetooth AoA positioning protocol framework, including but not limited to an application (APP) layer, a protocol framework (Framework) layer, a Bluetooth stack (Stack), and a Bluetooth controller (Controller).

The application layer may include a Huawei payment application. The protocol framework (Framework) layer includes an AoA interface. The Bluetooth stack (Stack) includes an AoA control module and an AoA positioning algorithm. The Bluetooth controller includes an angle of arrival controller (AoA controller).

When a user triggers a secure payment process, an AoA positioning transmitter (for example, the electronic device 100) may first open the Huawei payment application. After the Huawei payment application is opened, the Huawei payment application may deliver an AoA measurement instruction to the AoA control module in the Bluetooth stack (Stack) through the AoA interface at the protocol framework layer. After receiving the AoA measurement instruction, the AoA control module may control the AoA controller to send an AoA constant tone extension (constant tone extension, CTE) advertising packet to a nearby device.

After the AoA controller receives the AoA CTE advertising packet sent by the AoA positioning transmitter, an AoA positioning receiver (for example, another electronic device around the electronic device 100) may measure in-phase and quadrature (in-phase and quadrature, IQ) phase information by using the AoA controller. After the IQ phase information is measured, the AoA controller may send the IQ phase information to the AoA control module. The AoA control module may calculate an AoA value of the AoA positioning responder from the IQ phase information according to an AoA positioning algorithm. After the AoA value is calculated, the AoA control module may send the measured AoA value to the Huawei payment application through the AoA interface.

In embodiments of this application, an underlying AoA control and positioning algorithm capability may be encapsulated into a set of standard software development kit (software development kit, SDK) for invoking by a secure payment service (for example, the Huawei payment application), to implement a secure payment function provided in embodiments of this application.

The following describes an architecture of a Bluetooth antenna system in this application.

In this application, an AoA technology is used to position an electronic device. The electronic device may have a three-antenna architecture, support a BT 5.1 AoA standard, and is used for angle measurement and distance measurement.

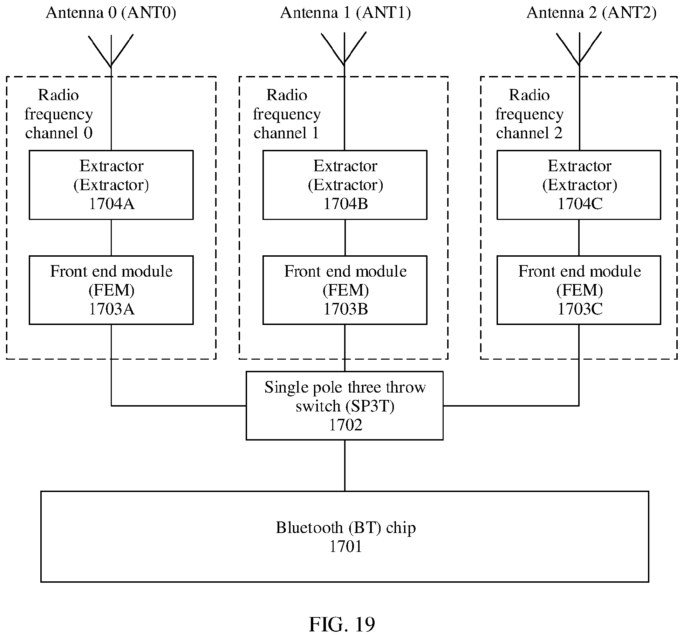

As shown in FIG. 19, embodiments of this application provide an architecture of a Bluetooth antenna system, which may include but is not limited to a Bluetooth (BT) chip 1701, a single pole three throw (single pole three throw, SP3T) switch 1702, three front end modules (front end module, FEM) (including a front end module 1703A, a front end module 1703B, and a front end module 1703C), three extractors (Extractor) (including an extractor 1704A, an extractor 1704B, and an extractor 1704C), and three antennas (an antenna 0, an antenna 1, and an antenna 2) One front end module and one extractor may form one radio frequency channel. For example, the front end module 1703A and the extractor 1704A may form a radio frequency channel 0 to be connected to the antenna 0. The front end module 1703B and the extractor 1704B may form a radio frequency channel 1 to be connected to the antenna 1. The front end module 1703C and the extractor 1704C may form a radio frequency channel 2 to be connected to the antenna 2.

The front end module may be configured to control receive and transmit control logic of the antenna. The single pole three throw switch 1702 may be configured to switch between the three AoA antennas for receiving. The extractor may be configured to allow only a Bluetooth signal in the 2.4G frequency band to be received.

The following describes an architecture of a Bluetooth chip system 1800 in this application.

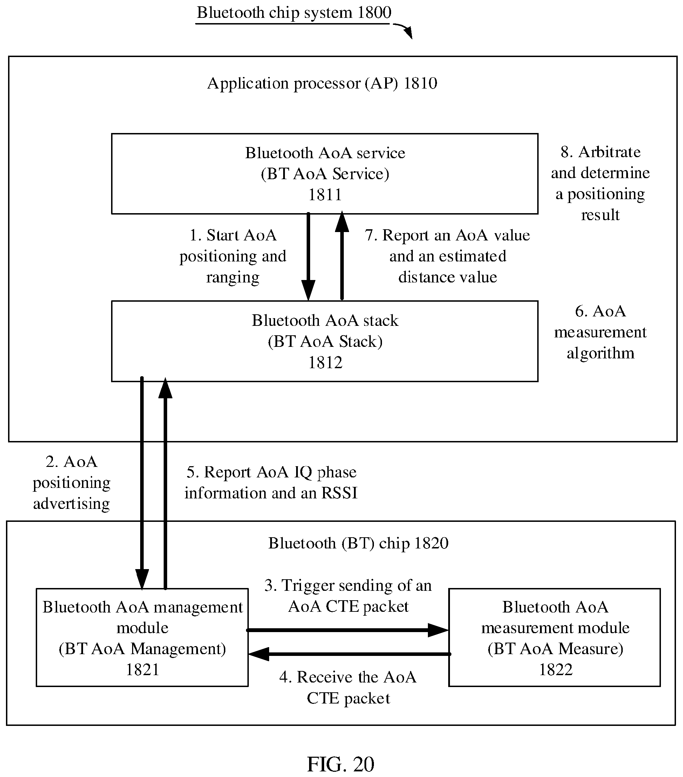

As shown in FIG. 20, embodiments of this application provide the architecture of the Bluetooth chip system 1800. The Bluetooth chip system 1800 may include but is not limited to including an application processor (AP) 1810 and a Bluetooth (BT) chip 1820. The application processor 1810 may include a Bluetooth AoA service (BT AoA Service) 1811 and a Bluetooth AoA stack (BT AoA Stack) 1812. The Bluetooth chip 1820 may include a Bluetooth AoA management module (BT AoA Management) 1821 and a Bluetooth AoA measurement module (BT AoA Measure) 1822. The Bluetooth AoA service 1811 may be a function/service/application that requires AoA positioning in the foregoing embodiments, such as "Huawei Share" and "Find My Device".

In an example of this application, the Bluetooth chip system 1800 may be in an AoA positioning transmitter (for example, the electronic device 100) or an AoA positioning receiver (for example, another electronic device around the electronic device 100).

For the AoA positioning transmitter, the Bluetooth chip system 1800 may implement the following steps:

1. The Bluetooth AoA service 1811 sends a start instruction to the Bluetooth AoA stack 1812, to instruct the Bluetooth AoA stack 1812 to perform AoA positioning and ranging.

2. The Bluetooth AoA stack 1812 may send an AoA advertising instruction to the Bluetooth AoA management module 1821, to instruct the Bluetooth AoA management module 1821 to advertise AoA positioning.

3. The Bluetooth AoA management module 1821 may trigger the Bluetooth AoA measurement module to send an AoA CTE packet.

For the AoA positioning receiver, the Bluetooth chip system 1800 may implement the following steps:

4. After receiving the AoA CTE packet sent by the AoA positioning transmitter, the Bluetooth AoA measurement module 1822 may send the AoA CTE packet to the Bluetooth AoA management module 1821.

5. After receiving the AoA CTE packet, the Bluetooth AoA management module 1821 may parse out AoA IQ phase information and a received signal strength indication (received signal strength indication, RSSI) based on the AoA CTE packet. Then, the Bluetooth AoA management module 1821 may report the AoA IQ phase information and the RSSI to the Bluetooth AoA stack 1812.

6. After receiving the AoA IQ phase information and the RSSI, the Bluetooth AoA stack 1812 may calculate an AoA value and an estimated distance value according to an AoA measurement algorithm.

7. After calculating the AoA value and the estimated distance value, the Bluetooth AoA stack 1812 may report the AoA value and the estimated distance value to the Bluetooth AoA service 1811.

8. The Bluetooth AoA service 1811 may arbitrate and determine a positioning result by using the AoA value and the estimated distance value.

In some embodiments, the AoA positioning receiver may further send the measured AoA value and the estimated distance value to the AoA positioning transmitter, and the AoA service 1811 in the AoA positioning transmitter arbitrates and determines a positioning result. For example, after obtaining an AoA value and an estimated distance value (or an RSSI value) through measurement, a nearby device of the electronic device 100 may send the AoA value and the estimated distance value (or the RSSI value) to the electronic device 100. The electronic device 100 may determine, based on the AoA value and the estimated distance value (or the RSSI value), whether a direction of a location of a nearby device is consistent with a swipe direction of a user on a touchscreen and whether the nearby device is the closest to the electronic device 100.

The following describes an interaction process in a Bluetooth AoA positioning standard protocol in this application.

In this application, two devices may perform Bluetooth AoA positioning in a BLE connectionless scenario. That is, AoA positioning is implemented when no BLE connection is established between the two devices. Two devices that interact with each other in Bluetooth AoA positioning may be referred to as an AoA positioning transmitter and an AoA positioning receiver. The AoA positioning transmitter may be the electronic device 100 in the foregoing embodiments of this application. The AoA positioning receiver may be another electronic device around the electronic device 100.

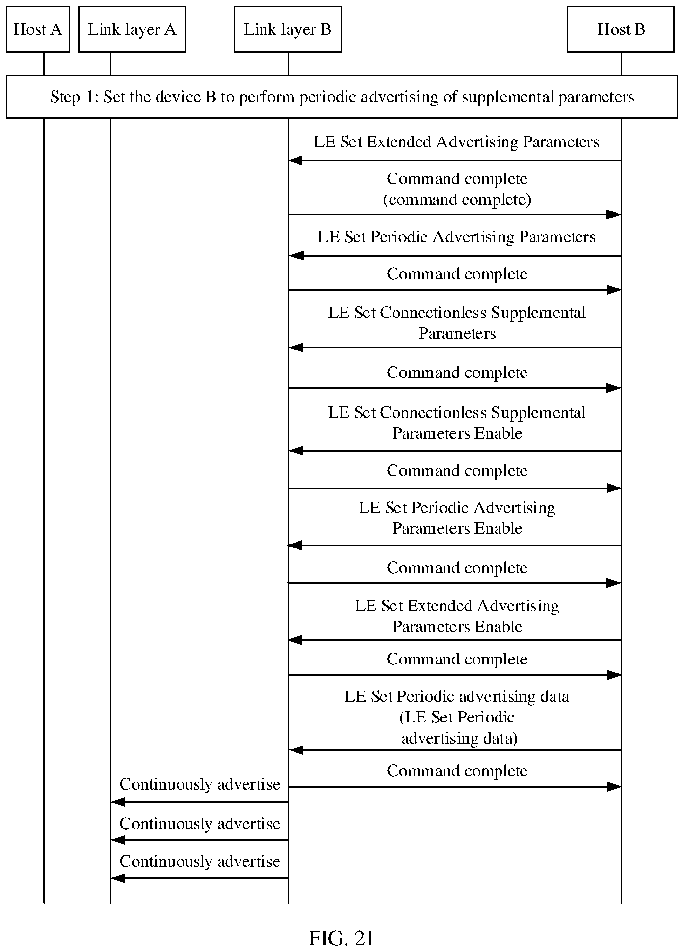

As shown in FIG. 21, a host A is a host (Host) on an AoA positioning receiver in a Bluetooth protocol. A link layer A is a link layer (link layer, LL) on the AoA positioning receiver in the Bluetooth protocol. A host B is a host (Host) on an AoA positioning transmitter in the Bluetooth protocol. A link layer B is a link layer (link layer, LL) on the AoA positioning transmitter in the Bluetooth protocol.

After a series of parameter settings, the AoA positioning transmitter enables periodic advertising of BLE AoA packets. The specific settings include settings of extended advertising parameters (LE Set Extended Advertising Parameters), settings of periodic advertising parameters (LE Set Periodic Advertising Parameters), and settings of connectionless supplemental parameters (LE Set Connectionless Supplemental Parameters). Then, the AoA positioning transmitter gradually enables the settings of connectionless supplemental parameters (LE Set Connectionless Supplemental Parameters Enable), enables the settings of periodic advertising parameters (LE Set Periodic Advertising Parameters Enable), and enables the settings of extended advertising parameters (LE Set Extended Advertising Parameters Enable). Finally, the AoA positioning transmitter fills in IQ data that is periodically advertised, and continuously advertises (ADV_EXT_IND) to a nearby device.

The settings of extended advertising parameters may include settings of an extended advertising handle (Advertising Handle), advertising event properties (Advertising Event Properties), a primary advertising interval min and a primary advertising interval max (Primary Advertising Interval Min, Primary Advertising Interval Max), a primary advertising channel map (Primary Advertising Channel Map), an own address type (Own Address Type), an own address (Own Address), a peer address type (Peer Address Type), a peer address (Peer Address), an advertising filter policy (Advertising Filter Policy), an advertising transmit power (Advertising Tx Power), a primary advertising physical layer (physical, PHY) (Primary Advertising PHY), and the like.

The settings of extended advertising parameters may include settings of a periodic advertising handle (Advertising Handle), a primary advertising interval min and a primary advertising interval max (Periodic Advertising Interval Min, Periodic Advertising Interval Max), periodic advertising properties (Periodic Advertising Properties), a transmit power (Tx Power), and the like.

The settings of connectionless supplemental parameters include settings of an advertising handle (Advertising Handle), a CTE length (CTE Length), a CTE type (CTE Type), a CTE count (CTE Count), a length of a switching pattern (Length of Switching Pattern), antenna IDs (Antenna IDs[i]), and the like.

For the Bluetooth AoA positioning standard protocol shown in FIG. 21, refer to the BT 5.1 AoA standard protocol.

After determining a location of at least one electronic device around a payer device, the payer device may display location information of each of the at least one electronic device and identification information (identification information of an electronic device for short) of a logged-in payee account on each electronic device. As described above, the electronic device around the payer device may include a payee device and/or one or more interfering devices. When there is a correct payee device around the payer device, a user may select the correct payee device based on the at least one piece of identification information and the at least one piece of location information that are displayed by the payer device. The at least one piece of identification information one-to-one corresponds to the at least one electronic device, and the at least one piece of location information one-to-one corresponds to the at least one electronic device. When there is no payee device around the payer device, the payer device may continue to seek a nearby device, and display identification information and location information of a newly sought electronic device, until the user selects a correct payee device or exits a secure payment process.

In an example, the identification information of the electronic device may include, for example, at least one of the following information: a payee account, a payee account name, a store address, and a payee account avatar.

In an example, the location information may include, for example, at least one of the following information: a distance between the electronic device and the payer device, and an azimuth of the electronic device relative to the payer device.

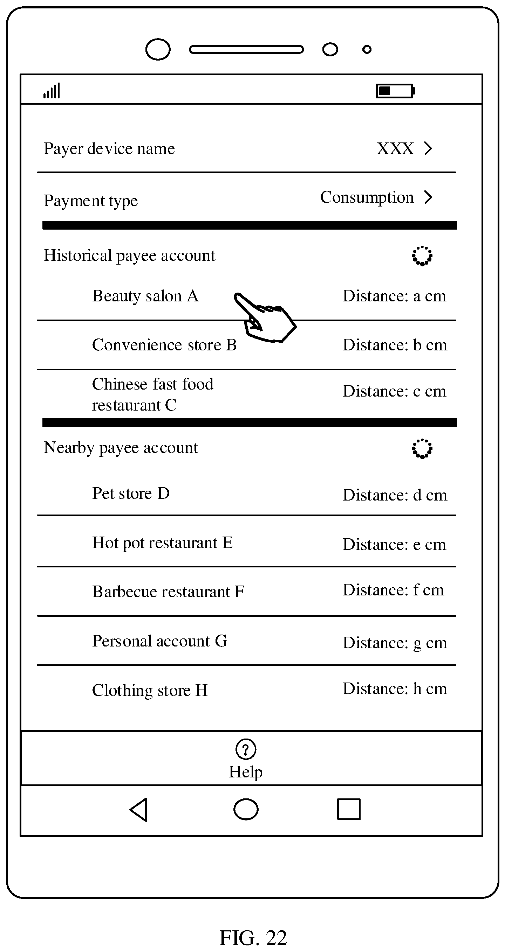

FIG. 22 shows a graphical user interface (graphical user interface, GUI) for secure payment according to an embodiment of this application. The GUI may be displayed on a payer device.

Optionally, the payer device may display identification information of at least one historical payee account. The at least one historical payee account is logged in on at least one electronic device, and the at least one historical payee account one-to-one corresponds to the at least one electronic device. The payer device may further display location information of the at least one electronic device. The historical payee account may be a payee account that has performed an amount transaction with the payer device. Optionally, the electronic device on which the historical payee account is logged in may be currently located around the payer device. In an example, after triggering a current payment process, the payer device may receive a device seek response message sent by the electronic device on which the historical payee account is logged in. In another example, a current address of the payer device is around an address of the electronic device on which the historical payee account is logged in. For example, the current address of the payer device is No. YY1 on Road XX, and the address of the electronic device on which the historical payee account is logged in is No. YY2 on Road XX. On the map, a distance between No. YY1 on Road XX and No. YY2 on Road XX is less than a preset threshold 1. Optionally, frequency at which the payer device makes payment to the historical payee account is greater than a preset threshold 2. For example, the payer device may display a historical payee account with most frequent payment or most frequent transaction.

The payer device has transacted with three historical payee accounts. Names of the three historical payee accounts may be a beauty salon A, a convenience store B, and a Chinese fast food restaurant C. A historical payee account whose account name is the beauty salon A is logged in on an electronic device A. A historical payee account whose account name is the convenience store B is logged in on an electronic device B. A historical payee account whose account name is the Chinese fast food restaurant C is logged in on an electronic device C. As shown in FIG. 22, the payer device may display identification information and location information of the electronic device A, the electronic device B, and the electronic device C.

Identification information of the electronic device A may be a name of a logged-in payee account on the electronic device A, for example, the beauty salon A. Optionally, the identification information of the electronic device A may further include a trademark (not shown in FIG. 22) of the beauty salon A.

Identification information of the electronic device B may be a name of a logged-in payee account on the electronic device B, for example, the convenience store B. Optionally, the identification information of the electronic device B may further include a trademark (not shown in FIG. 22) of the convenience store B.

Identification information of the electronic device C may be a name of a logged-in payee account on the electronic device C, for example, the Chinese fast food restaurant C. Optionally, the identification information of the electronic device C may further include a trademark (not shown in FIG. 22) of the Chinese fast food restaurant C.

Optionally, the payer device may sort the plurality of payee accounts based on a standard such as location information (such as a distance and an azimuth) or payment frequency.

In an example, the payer device may receive a device seek response message sent by the electronic device A, and the payer device may determine, based on the device seek response message, that a distance between the electronic device A and the payer device is a distance a. Location information of the electronic device A on the GUI may be the distance a.

In an example, a distance between the current address of the payer device and an address of the electronic device B is a distance b, and the distance b is less than the preset threshold 1. However, the payer device may not receive a device seek response message sent by the electronic device B. Location information of the electronic device B on the GUI may be the distance b.

In an example, the payer device makes payment to the electronic device C more frequently than another payee device. In a possible case, if the payer device may receive a device seek response message sent by the electronic device C, the payer device may determine, based on the device seek response message, that a distance between the electronic device C and the payer device is a distance c. Location information of the electronic device C on the GUI may be the distance c. In another possible case, if the payer device does not receive the device seek response message sent by the electronic device C, and the distance between the current address of the payer device and an address of the electronic device C is a distance c, location information of the electronic device C on the GUI may be the distance c.

The payer device may display identification information and location information of a nearby electronic device. A logged-in account on the nearby electronic device may be referred to as a "nearby payee account", as shown in FIG. 22. For example, the nearby electronic device may be one or more electronic devices around the payer device. For another example, the payer device may receive device seek response messages sent by a plurality of electronic devices, and the nearby electronic device may be an electronic device, in the plurality of electronic devices, other than an electronic device on which a historical payee account is logged in.

There may be five nearby electronic devices around the payer device. The GUI may include identification information and location information of the five nearby electronic devices. The five nearby electronic devices may be an electronic device D, an electronic device E, an electronic device F, an electronic device G, and an electronic device H.

Identification information of the electronic device D may be a name of a logged-in payee account on the electronic device D, for example, a pet store D. Optionally, the identification information of the electronic device D may further include a trademark (not shown in FIG. 22) of the pet store D. The payer device may receive a device seek response message sent by the electronic device D, and the payer device may determine, based on the device seek response message, that a distance between the electronic device D and the payer device is a distance d. Location information of the electronic device D on the GUI may be the distance d.

Identification information of the electronic device E may be a name of a logged-in payee account on the electronic device E, for example, a hot pot restaurant E. Optionally, the identification information of the electronic device E may further include a trademark (not shown in FIG. 22) of the hot pot restaurant E. The payer device may receive a device seek response message sent by the electronic device E, and the payer device may determine, based on the device seek response message, that a distance between the electronic device E and the payer device is a distance e. Location information of the electronic device E on the GUI may be the distance e.

Identification information of the electronic device F may be a name of a logged-in payee account on the electronic device F, for example, a barbecue restaurant F. Optionally, the identification information of the electronic device F may further include a trademark (not shown in FIG. 22) of the barbecue restaurant F. The payer device may receive a device seek response message sent by the electronic device F, and the payer device may determine, based on the device seek response message, that a distance between the electronic device F and the payer device is a distance f. Location information of the electronic device F on the GUI may be the distance f.

Identification information of the electronic device G may be a name of a logged-in payee account on the electronic device G, for example, a personal account G. Optionally, the identification information of the electronic device G may further include an avatar (not shown in FIG. 22) of the personal account G. The payer device may receive a device seek response message sent by the electronic device G, and the payer device may determine, based on the device seek response message, that a distance between the electronic device G and the payer device is a distance g. Location information of the electronic device G on the GUI may be the distance g.

Identification information of the electronic device H may be a name of a logged-in payee account on the electronic device H, for example, a clothing store H. Optionally, the identification information of the electronic device H may further include a trademark (not shown in FIG. 22) of the clothing store H. The payer device may receive a device seek response message sent by the electronic device H, and the payer device may determine, based on the device seek response message, that a distance between the electronic device H and the payer device is a distance h. Location information of the electronic device H on the GUI may be the distance h.

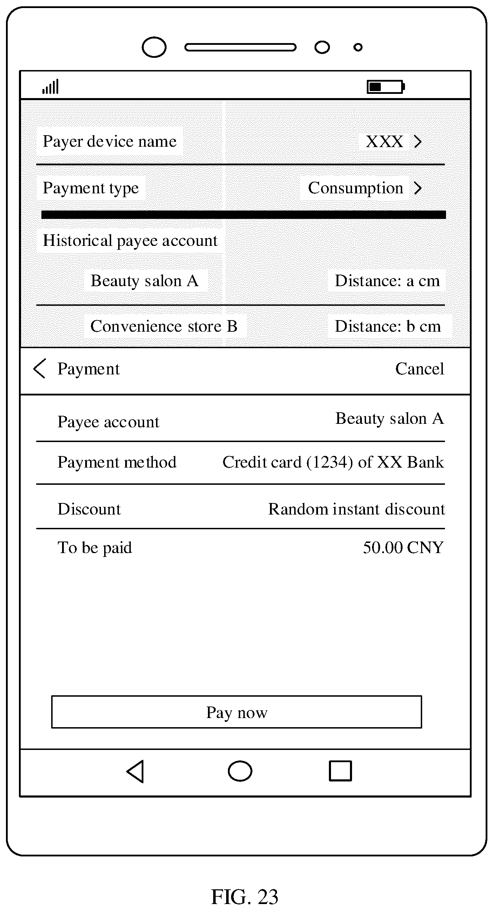

The user may determine a correct payee account based on the identification information and the location information shown in FIG. 22. For example, the user may tap any payee account to enter a subsequent payment process. A device on which a correct payee account is logged in is a correct payee device. As shown in FIG. 23, the payee device selected by the user is the electronic device A, and a name of a logged-in payee account on the electronic device A is the beauty salon A. The payer device may pay 50 CNY by using a default payment method.

Optionally, the payer device may display a name of the payer device. As shown in FIG. 22, the GUI may include information indicating the name of the payer device, and the name of the payer device is "XXX".

Optionally, the payer device may display current secure payment information. As shown in FIG. 22, the GUI may include information indicating a current payment type, and the current payment type may be, for example, consumption. The current secure payment information may also be referred to as current transaction information.

Embodiments of this application provide a secure payment method, so that a payer device can transfer an amount to a payee device.

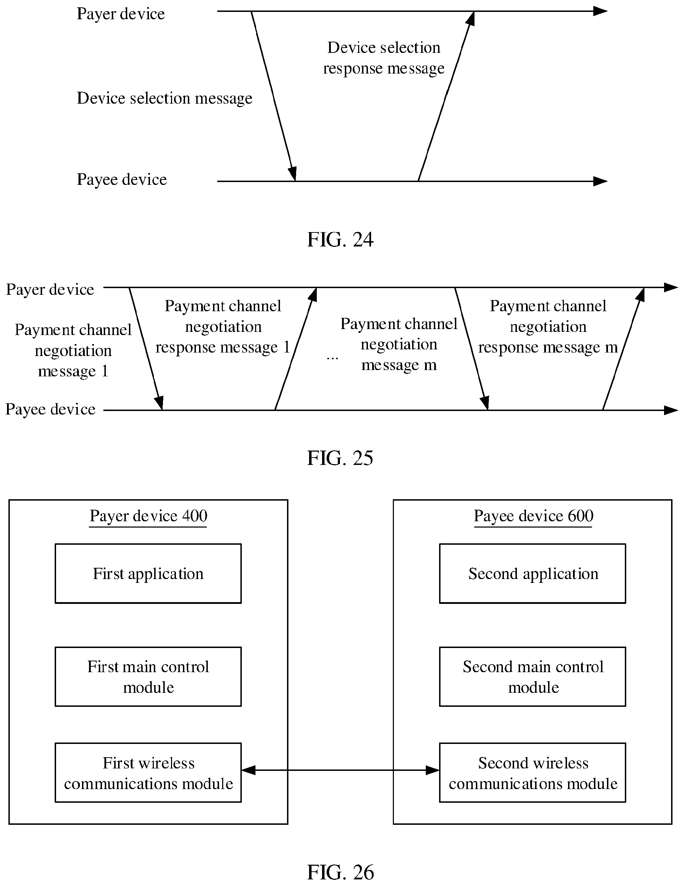

As shown in FIG. 24, optionally, the payer device may send a device selection message to the payee device. The device selection message may be used to instruct the payer device to select the payee device to pay the amount. Correspondingly, the payee device may send a device selection response message to the payer device in response to the device selection message. The device selection response message may indicate that the payee device agrees with selection by the payer device. Device confirmation between the payer device and the payee device may be completed by using the device selection message and the device selection response message.

In an example, the device selection (SEL_REQ) message may include a third instruction command word (command, CMD), a third timestamp (timestamp), a unique identifier (unique identifier, UID) of the payer device, and a third true random number (random number). The third instruction command word (command, CMD) may be a command word of a device selection instruction.

In an example, the device selection response (SEL_RSP) message may include a fourth instruction command word (command, CMD), a fourth timestamp (timestamp), a unique identifier (unique identifier, UID) of the payee device, and a fourth true random number (random number). The fourth instruction command word (command, CMD) may be a command word of a device selection response instruction.

Then, a secure payment communication channel may be established between the payer device and the payee device.

Optionally, the payer device may send at least one payment channel negotiation message (NEQ_REQ) to the payee device. The payment channel negotiation message may indicate any one of the following: a communication connection status of the payer device and a communications interface (cmd_channel) used by the payer device for payment transaction. Correspondingly, the payee device may send at least one payment channel negotiation response message (NEQ_RES) to the payer device in response to the at least one payment channel negotiation message. The payment channel negotiation response message may indicate any one of the following: a communication connection status of the payee device and a communications interface (rsp_channel) used by the payee device for payment transaction. The at least one payment channel negotiation message one-to-one corresponds to the at least one payment channel negotiation response message, and any payment channel negotiation response message is a feedback for a payment channel negotiation message corresponding to the payment channel negotiation response message. The secure payment communication channel may be established between the payer device and the payee device by using the payment channel negotiation message and the payment channel negotiation response message.

The communication connection status of the payer device may be that the payer device is currently in an offline or online communication state. For example, the online may mean that the payer device may transact with the payee device by using a cloud server. Correspondingly, for example, the offline may mean that the payer device may transact with the payee device without using a cloud server. Alternatively, for example, the offline may mean that the payer device transacts with the payee device through a short-range communication connection between the payer device and the payee device.

The communications interface used by the payer device for payment transaction may include, for example, a UWB communications interface, a BLE communications interface, a Wi-Fi communications interface, an NFC communications interface, and an LTE communications interface.

The communication connection status of the payee device may be that the payee device is currently in an offline or online communication state. For example, the online may mean that the payee device may transact with the payer device by using a cloud server. Correspondingly, for example, the offline may mean that the payee device may transact with the payer device without using a cloud server. Alternatively, for example, the offline may mean that the payee device transacts with the payer device through a short-range communication connection between the payer device and the payee device.

The communications interface used by the payee device for payment transaction may include, for example, a UWB communications interface, a BLE communications interface, a Wi-Fi communications interface, an NFC communications interface, and an LTE communications interface.

As shown in FIG. 25, the payer device may send a payment channel negotiation message 1 to the payee device. The payee device may send a payment channel negotiation response message 1 for the payment channel negotiation message 1 to the payer device. The payer device may send a payment channel negotiation message 2 for the payment channel negotiation response message 1 sent by the payee device. Correspondingly, the payee device may send a payment channel negotiation response message 2 for the payment channel negotiation message 2 to the payer device. The payer device may continue to send a payment channel negotiation message until the payer device sends a payment communication message m and receives a response message that is sent by the payee device for the payment channel negotiation message m (m may be an integer greater than 1). In this way, the secure payment communication channel may be established between the payer device and the payee device.

FIG. 26 is a schematic diagram of a software structure of a payer device and a schematic diagram of a software structure of a payee device according to an embodiment of this application.

As shown in FIG. 26, a payer device 400 may run a first application, to complete a secure payment process. The first application may be an entry program for payment transaction. With reference to the first application, the payer device 400 may display a human-machine interaction interface used for payment.

The payer device 400 may further include a first main control module and a first wireless communications module.

The first main control module may be, for example, an application processor (application processor, AP). The first main control module may control the first wireless communications module to send the device seek message shown in FIG. 4, the device selection message shown in FIG. 24, and the payment channel message shown in FIG. 25.

For example, the first wireless communications module may be the wireless communications module 300 shown in FIG. 6, FIG. 7, FIG. 13, or FIG. 14. The first wireless communications module may support, for example, a UWB communications protocol or a BLE communications protocol.

Optionally, a payment channel negotiation message may indicate that a communications module that is used by the payer device in a subsequent transaction process is the first wireless communications module.

That is, in the secure payment process, the first wireless communications module may always be used to interact with the payee device.

As shown in FIG. 26, a payee device 600 may run a second application, to complete a secure payment process. For example, the payee device 600 may be the electronic device 500 shown in FIG. 9, FIG. 10, or FIG. 16. The second application may be an entry program for payment transaction. With reference to the second application, the payee device 600 may display a human-machine interaction interface used for payment.

The payee device 600 may further include a second main control module and a second wireless communications module.

The second main control module may be, for example, an application processor (application processor, AP). The second main control module may control the second wireless communications module to send the device seek response message shown in FIG. 4, the device selection response message shown in FIG. 24, and the payment channel response message shown in FIG. 25.

For example, the second wireless communications module may include the transmit antenna 520 and the receive antenna 510 shown in FIG. 9 or FIG. 16. For another example, the second wireless communications module may be the wireless communications module 300 shown in FIG. 6, FIG. 7, FIG. 13, or FIG. 14. The second wireless communications module may support, for example, a UWB communications protocol or a BLE communications protocol.

Optionally, a payment channel negotiation response message may indicate that a communications module that is used by the payee device in a subsequent transaction process is the second wireless communications module.

That is, in the secure payment process, the second wireless communications module may always be used to interact with the payer device.

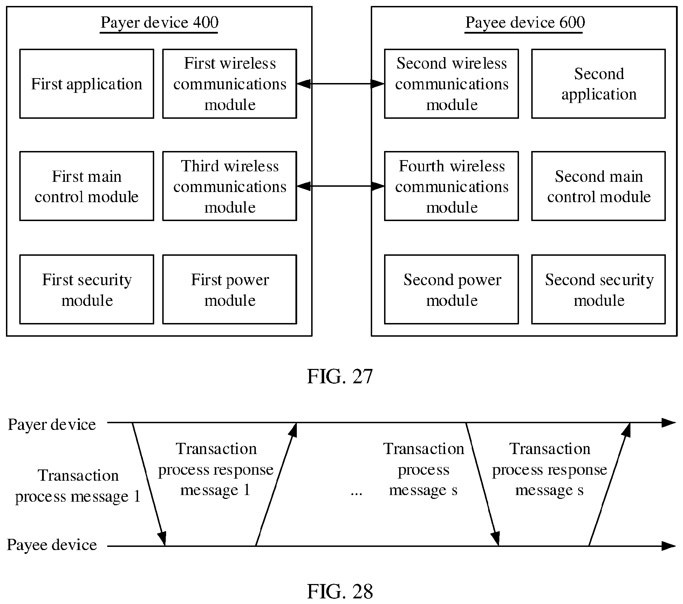

FIG. 27 is a schematic diagram of a software structure of another payer device and a schematic diagram of a software structure of another payee device according to an embodiment of this application.

Compared with the payer device 400 shown in FIG. 26, a payer device 400 shown in FIG. 27 further includes a third wireless communications module, a first security module, and a first power module.

For example, the third wireless communications module may be a wireless communications module with a relatively high security coefficient. For another example, the third wireless communications module may be configured to connect to the internet. The third wireless communications module may support, for example, an LTE communications protocol or a WLAN communications protocol.

The first security module may be configured to provide a security maintenance service. For example, the first security module may have security functions such as user identity verification, data encryption, data decryption, and secure storage of user data.

The first power module may be configured to provide a power input for the payer device 400.

In addition, the first main control module may be further configured to control and manage the first security module, the first power module, and the third wireless communications module.

Optionally, a payment channel negotiation message may indicate that a communications module that is used by the payer device in a subsequent transaction process is the third wireless communications module.

In other words, the payer device interacts with the payee device through the third wireless communications module in the subsequent transaction process.

Compared with the payee device 600 shown in FIG. 26, a payee device 600 shown in FIG. 27 further includes a fourth wireless communications module, a second security module, and a second power module.

For example, the fourth wireless communications module may be a wireless communications module with a relatively high security coefficient. For another example, the fourth wireless communications module may be configured to connect to the internet. The fourth wireless communications module may support, for example, an LTE communications protocol or a WLAN communications protocol.

The second security module may be configured to provide a security maintenance service. For example, the second security module may have security functions such as user identity verification, data encryption, data decryption, and secure storage of user data.

The second power module may be configured to provide power input for the payee device 600.

In addition, the second main control module may be further configured to control and manage the second security module, the second power module, and the fourth wireless communications module.

Optionally, a payment channel negotiation response message may indicate that a communications module that is used by the payee device in a subsequent transaction process is the fourth wireless communications module.

In other words, the payee device interacts with the payer device through the fourth wireless module in the subsequent transaction process.

Then, the payer device may complete the subsequent transaction process by using a communication channel indicated by the payment channel negotiation message or the payment channel negotiation response message. Correspondingly, the payee device may complete the subsequent transaction process by using a communication channel indicated by the payment channel negotiation message or the payment channel negotiation response message.

Optionally, the payer device may send at least one transaction process message (TRANS_REQ) to the payee device. The transaction process message may indicate any one of the following transaction information (cmd_data): a transaction type, account information on the payer device, a transaction amount, and the like. Correspondingly, the payee device may send at least one transaction process response message (TRANS _RES) to the payer device in response to the at least one transaction process message. The transaction process response message may indicate any one of the following transaction information (rsp_data): a transaction type, account information on the payee device, a transaction amount, and the like. The at least one transaction process message one-to-one corresponds to the at least one transaction process response message, and any transaction process response message is a feedback for a transaction process message corresponding to the transaction process response message. An amount may be transferred from a logged-in account on the payer device to a logged-in account on the payee device by using the transaction process message and the transaction process response message. For example, the transaction process message may be sent by the first wireless communications module shown in FIG. 26 or the third wireless communications module shown in FIG. 27. For example, the transaction process response message may be sent by the second wireless communications module shown in FIG. 26 or the fourth wireless communications module shown in FIG. 27.

As shown in FIG. 28, the payer device may send a transaction process message 1 to the payee device. The payee device may send a transaction process response message 1 for the transaction process message 1 to the payer device. The payer device may send a transaction process message 2 for the transaction process response message sent by the payee device. Correspondingly, the payee device may send a transaction process response message 2 for the transaction process message 2 to the payer device. The payer device may continue to send a transaction process message until the payer device sends a transaction process message s and receives a response message that is sent by the payee device for the transaction process message s (s may be an integer greater than 1). In this way, the transaction between the payer device and the payee device can be completed.

According to the invention, after receiving a message sent by the payee device, the payer device recalculates a relative location of the payee device around the payer device. When the relative location meets a preset condition, the payer device stops transacting with the payee device.

For example, the relative location of the payee device around the payer device may include: a distance between the payer device and the payee device, and an azimuth of the payee device relative to the payer device.

That the relative location meets the preset condition may include: The distance between the payer device and the payee device is longer than a first preset threshold. According to the invention, the preset condition includes a variation of the azimuth of the payee device relative to the payer device with time is greater than a second preset threshold.

In an example, the distance between the payee device and the payer device suddenly becomes longer, so that the distance between the payer device and the payee device is longer than the first preset threshold. The payer device may stop transacting with the payee device. The payer device may further display prompt information, to prompt the user that the payee device is currently far away from the payer device and there may be a security risk, and advise the user to stop current transaction.

In an example, because the payee device may move quickly around the payer device, the variation of the azimuth of the payee device relative to the payer device is greater than the second preset threshold. The payer device stops transacting with the payee device. The payer device may further display prompt information, to prompt the user that the payee device is moving and there may be a security risk, and advise the user to stop current transaction.

Because the payer device can monitor the relative location of the payee device in real time, when the relative location of the payee device is abnormal, the payer device can notify the user and end the transaction as soon as possible. This helps improve transaction security.

Optionally, the payer device may support a half-duplex communications protocol.

Optionally, the payee device may support a half-duplex communications protocol.

Table 1 shows possible load statuses of the messages described above.

Table 1 Messages received and sent in a secure payment process and loads in the messages

| Messages | Load | | | | | | | |
|---|---|---|---|---|---|---|---|---|
| SEEK_REQ | cmd_uid | cmd_stamp | cmd_rand | cmd_name | | | | |
| SEEK_RES | cmd_uid | cmd_stamp | cmd_rand | cmd_name | rsp_uid | rsp_stamp | rsp_rand | rsp_name |
| SEL_REQ | cmd_uid | cmd_stamp | cmd_rand | rsp_uid | | | | |
| SEL_RES | cmd_uid | cmd_stamp | cmd_rand | rsp_uid | rsp_stamp | rsp_rand | | |
| NEQ_REQ | cmd_uid | cmd_stamp | cmd_rand | rsp_uid | cmd_channel | | | |
| NEQ_RES | cmd_uid | cmd_stamp | cmd_rand | rsp_uid | rsp_stamp | rsp_rand | rsp_channel | channel |
| TRANS_REQ | cmd_uid | cmd_stamp | cmd_rand | rsp_uid | cmd_data | | | |
| TRANS_RES | cmd_uid | cmd_stamp | cmd_rand | rsp_uid | rsp_stamp | rsp_rand | rsp_data | |

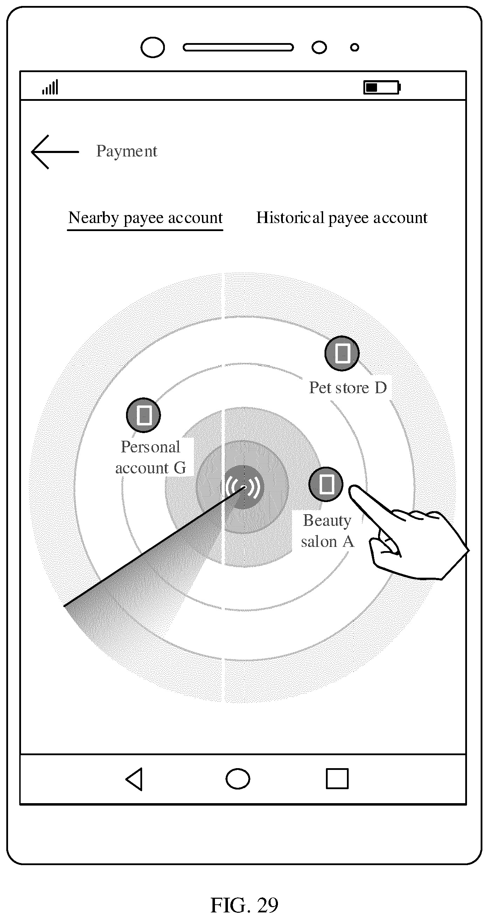

FIG. 29 shows a GUI for secure payment according to an embodiment of this application. The GUI may be displayed on a payer device.

The payer device may display identification information and location information of at least one nearby payee account.

As shown in FIG. 29, the GUI may include identification information and location information of three nearby electronic devices. The three nearby electronic devices may be an electronic device A, an electronic device D, and an electronic device G.

The GUI may include a device orientation diagram, and there are icons of the electronic device A, the electronic device D, and the electronic device G on the device orientation diagram. A relative location of an icon of the electronic device A in the device orientation diagram corresponds to a relative location of the electronic device A around the payer device. A relative location of an icon of the electronic device D in the device orientation diagram corresponds to a relative location of the electronic device D around the payer device. A relative location of an icon of the electronic device G in the device orientation diagram corresponds to a relative location of the electronic device G around the payer device.

Identification information of the electronic device A may be a name of a logged-in payee account on the electronic device A, for example, a beauty salon A. Optionally, the identification information of the electronic device A may further include a trademark of the beauty salon A.

The payer device may receive a device seek response message sent by the electronic device A, and the payer device may determine, based on the device seek response message, that a distance between the electronic device A and the payer device is a distance a, and an azimuth of the electronic device A relative to the payer device is $\theta_a$. The payer device displays the icon of the electronic device A on the device orientation diagram based on the distance a and the azimuth $\theta_a$. Correspondingly, the payer device may determine, based on device seek response messages sent by the electronic device D and the electronic device G, that a distance between the electronic device D and the payer device is a distance d, an azimuth of the electronic device D relative to the payer device is $\theta_d$, a distance between the electronic device G and the payer device is a distance g, and an azimuth of the electronic device D relative to the payer device is $\theta_g$. The payer device displays the icon of the electronic device D on the device orientation diagram based on the distance d and the azimuth $\theta_d$. The payer device displays the icon of the electronic device G on the device orientation diagram based on the distance g and the azimuth $\theta_g$.

In the device orientation diagram shown in FIG. 29, the electronic device A may be an electronic device closest to the payer device, followed by the electronic device G, and the electronic device D may be an electronic device farthest away from the payer device. Therefore, a<g<d.

As shown in FIG. 29, the azimuth $\theta_a$ may indicate that the electronic device A is located on the right (or east) of the payer device. The azimuth $\theta_d$ may indicate that the electronic device D is located on the front left (or northwest) of the payer device. The azimuth $\theta_g$ may indicate that the electronic device G is located on the front right (or northeast) of the payer device.

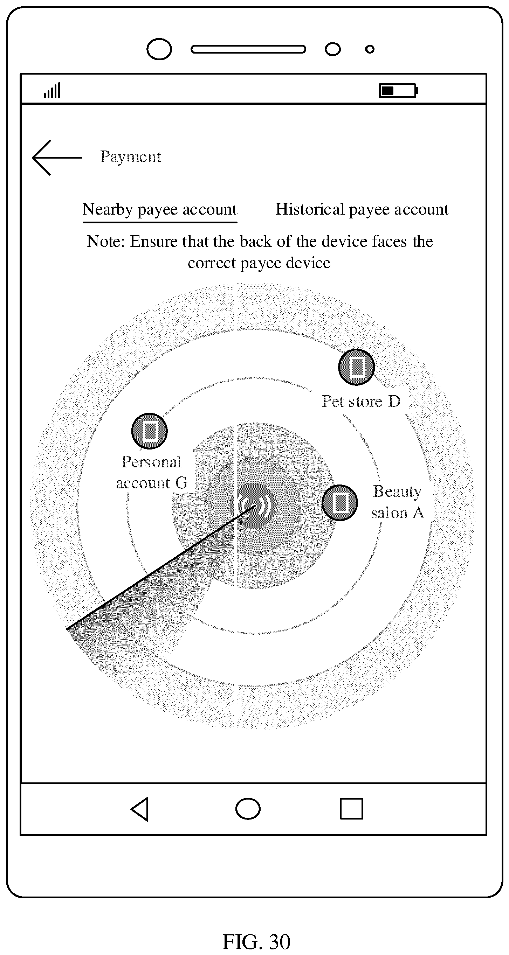

The user may move and/or rotate the payer device, to change a location of a nearby payee account relative to the payer device. As shown in FIG. 29, there may be a plurality of electronic devices around the payer device, and distances between the payer device and the plurality of electronic devices differ slightly. For example, the distances between the plurality of electronic devices and the payer device are all 1 to 2 meters. As shown in FIG. 30, a GUI may include prompt information, to indicate the user to move and/or rotate the payer device, so that a back (namely, a cover of the payer device) of the payer device faces a correct payee device. This helps the user to select a correct payee device.

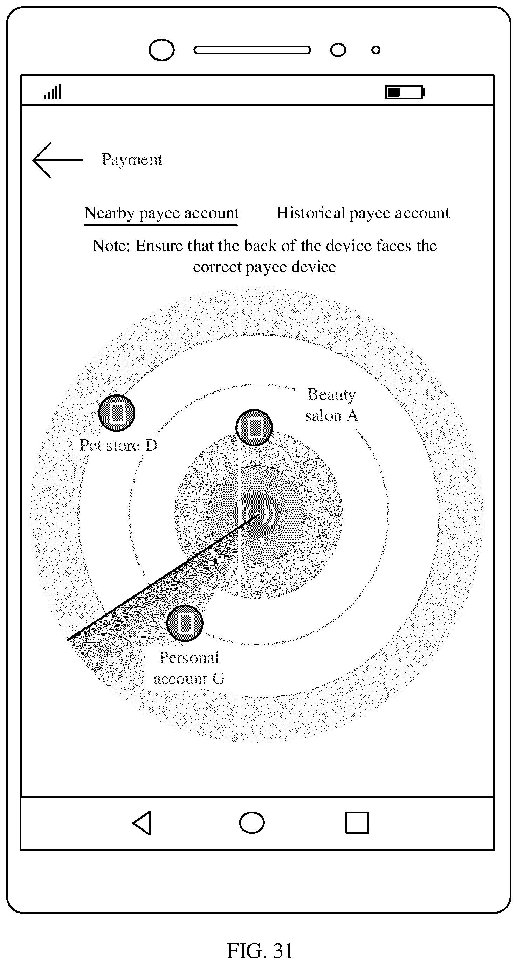

FIG. 31 shows relative locations of the plurality of electronic devices around the payer device after the payer device is moved and/or rotated. In this case, the electronic device A (a payee account whose account name is the beauty salon A is logged in on the electronic device A) is located directly in front of the payer device. Therefore, the user can select a correct payee device easily. Direct front may be understood as that the azimuth $\theta$ shown in FIG. 12 is less than a third preset threshold. For example, $\theta$ is less than 5°. For another example, $\theta$ is less than 30°. Regardless of whether the payee device is located on the left or right of the electronic device, the azimuth should always be a positive value.

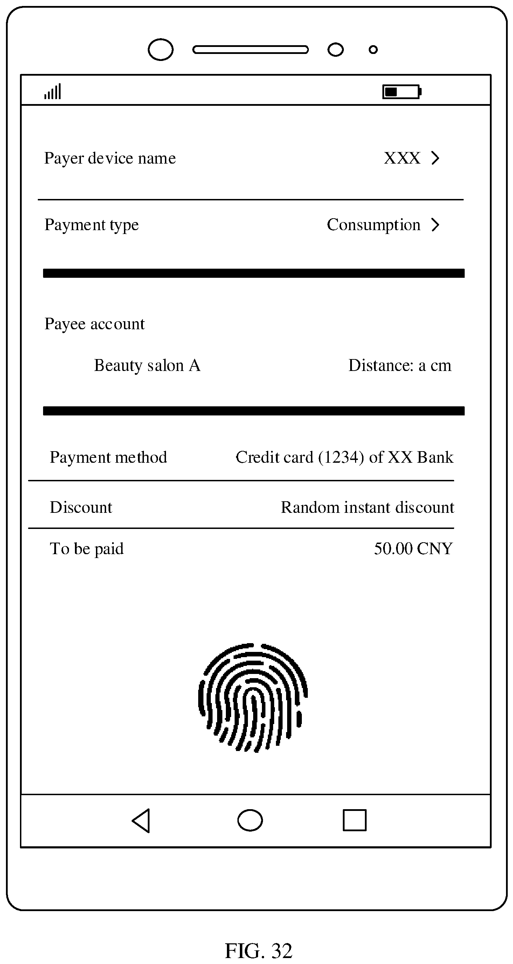

FIG. 32 shows a GUI for secure payment according to an embodiment of this application. The GUI may be displayed on a payer device.

The payer device may display identification information and location information of a payee device. As shown in FIG. 32, the identification information of the payee device may be a name of a logged-in payee account on the payee device, for example, a beauty salon A. The location information of the payee device may be a distance a between the payee device and the payer device.

In an example, if the payer device receives feedback information sent by only one electronic device, the payer device may determine that the electronic device is the payee device.

In an example, the payer device may determine a distance between each of a plurality of electronic devices and the payer device based on a plurality of pieces of received feedback information. The plurality of electronic devices one-to-one correspond to the plurality of pieces of feedback information. The payer device may determine an electronic device closest to the payer device as the payee device.

In an example, the payer device may determine an azimuth of each of a plurality of electronic devices relative to the payer device based on a plurality of pieces of received feedback information. The plurality of electronic devices one-to-one correspond to the plurality of pieces of feedback information. The payer device may determine an electronic device directly opposite the payer device as the payee device.

The user may check the payee device shown in FIG. 32. If the payee device is correct, the user may further check transaction information. The transaction information may include, for example, a payment method, a discount, and a payment amount. As shown in FIG. 32, the user may check the following information: The payee device is an electronic device used for payment receipt in the beauty salon A, a payment method that can be used for this transaction is payment by using a credit card ending in 1234 of XX Bank, a discount that can be used for this transaction is "random instant discount", and this transaction requires a payment of 50 CNY.

If the payee device is incorrect, the user may tap "Payee account" or "Beauty salon A" shown in FIG. 32, to enter a GUI for selecting a payee device. For example, the GUI for selecting a payee device may be the GUI shown in FIG. 22, FIG. 29, FIG. 30, or FIG. 31. The user may also directly exit the secure payment process.

If the transaction information is all correct, for example, the user may perform payment by using a fingerprint. As shown in FIG. 32, the user may tap a fingerprint icon on the GUI, and place a finger on a fingerprint recognition module, to perform payment by using the fingerprint. Alternatively, the user may directly place a finger of the user on the fingerprint recognition module, to complete payment verification. In addition to fingerprint payment, a payment password may also be entered to make payment. Alternatively, the user may make payment by facial recognition. A specific payment verification manner is not limited in embodiments of this application.

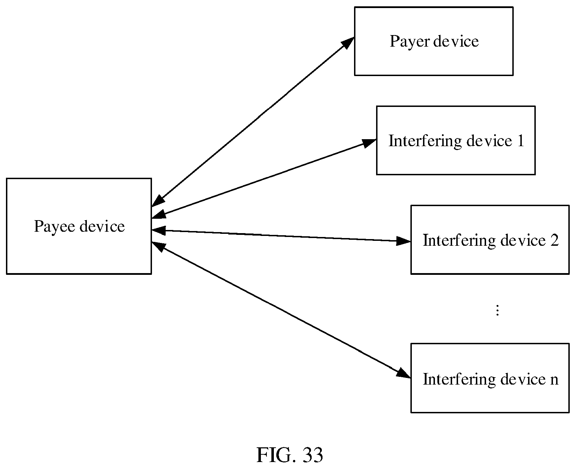

FIG. 33 shows an application scenario of secure payment. In this application scenario, there is a payer device used for payment and a payee device used for payment receipt. In addition, in this application scenario, there may be one or more interfering devices, for example, an interfering device 1, an interfering device 2, ..., and an interfering device n shown in FIG. 33. The payee device needs to determine a correct electronic device from the plurality of electronic devices around the payee device as the payer device. In other words, the payee device should avoid receiving an amount from an interfering device. For example, the payee device may be the electronic device 200 shown in FIG. 2. For example, the payer device and the one or more interfering devices may be the electronic device 100 shown in FIG. 1.

The payee device may trigger a secure payment process, and advertise a device seek message, to obtain information about another electronic device around the payee device. In other words, the payee device may advertise a device seek message, and the device seek message is used to search for or seek the payer device. Correspondingly, an electronic device around the payee device may send a device seek response message for the device seek message.

The payee device may determine relative locations of one or more electronic devices around the payee device based on one or more received device seek response messages. For example, the payee device may include at least two receive antennas, and determine a relative location of a nearby electronic device by using the two receive antennas. For another example, an electronic device around the payee device may determine a relative location of the electronic device, and send location information to the payee device, so that the payee device can determine a relative location of the electronic device around the payee device. The foregoing describes, by using embodiments shown in FIG. 4 to FIG. 21, a manner of determining a relative location of a nearby electronic device. Details do not need to be described herein again.

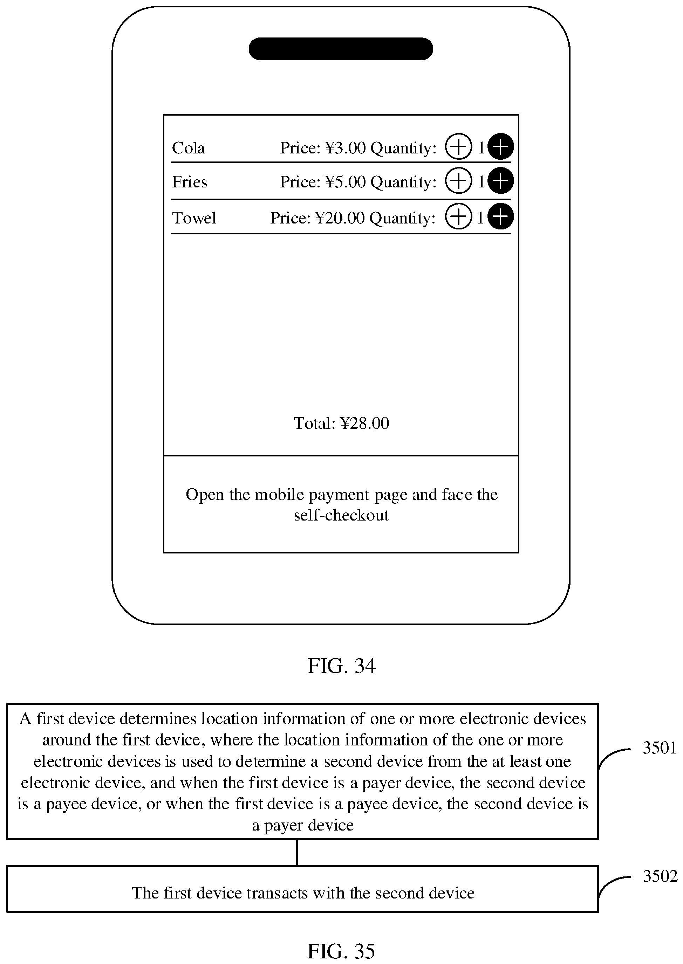

FIG. 34 shows a GUI for secure payment according to an embodiment of this application. The GUI may be displayed on a payee device. The payee device may be, for example, a self-checkout device in a supermarket. The GUI may include details of items purchased by a user. In addition, the GUI may further prompt the user to move a payer device to be directly in front of the payee device, as shown in FIG. 34. In a self-checkout process, the user usually stands directly in front of a self-checkout device. Therefore, the payee device may determine an electronic device directly in front of the self-checkout device as a payer device based on orientations of nearby electronic devices, and transact with the payer device, for example, send information about a to-be-transacted order to the payer device, so that the payer device can display the information about the to-be-transacted order.

FIG. 35 is a schematic flowchart of a secure payment method according to an embodiment of this application.

3501: A first device determines location information of one or more electronic devices around the first device, where the location information of the one or more electronic devices is used to determine a second device from the at least one electronic device, and when the first device is a payer device, the second device is a payee device, or when the first device is a payee device, the second device is a payer device.

3502: The first device transacts with the second device.

Optionally, the location information of the electronic device includes at least one of the following: a distance between the first device and the electronic device, and an azimuth of the electronic device relative to the first device.

Optionally, before the first device transacts with the second device, the payment method further includes: The first device displays a target interface, where the target interface includes the location information of the one or more electronic devices. The first device responds to a target operation on the target interface, where the target operation is used to determine the second device from the at least one electronic device.

For example, the target interface may be the user interface shown in FIG. 22, FIG. 29, FIG. 30, FIG. 31, FIG. 32, or FIG. 34.

Optionally, before the first device transacts with the second device, the payment method further includes: determining, based on the location information of the one or more electronic devices, an electronic device that meets a preset condition in the one or more electronic devices as the second device.

Optionally, the preset condition includes at least one of the following: a distance to the first device is the shortest; and an electronic device is in a target orientation of the first device.

Optionally, the target orientation includes direct front. Direct front may be understood as that an azimuth relative to the payer device is less than a third preset threshold.

Optionally, before the first device determines the location information of the one or more electronic devices around the first device, the payment method further includes: The first device advertises a device seek message. The first device receives one or more device seek response messages for the device seek message through at least three receive antennas. The one or more device seek response messages are sent by the one or more electronic devices. The one or more device seek response messages one-to-one correspond to the one or more electronic devices. The one or more device seek response messages include a target device seek response message. The target device seek response message corresponds to a target electronic device in the one or more electronic devices. The determining location information of one or more electronic devices around the first device includes: The first device determines the location information of the target electronic device based on a time difference for receiving the target device seek response message by the at least three receive antennas.

For example, the device seek message may be the device seek message shown in FIG. 4 or FIG. 5, and the device seek response message may be the device seek response message shown in FIG. 4.

For example, the at least three receive antennas may be the receive antenna 311, the receive antenna 312, and the receive antenna 313 shown in FIG. 6, FIG. 9, FIG. 10, or FIG. 11. For example, the at least three receive antennas may be the receive antenna 311, the receive antenna 312, and the antenna 321 shown in FIG. 7. For example, the at least three receive antennas may be the receive antenna 1, the receive antenna 2, and the receive antenna 3 shown in FIG. 8. For example, the at least three receive antennas may be the receive antenna 311, the receive antenna 312, the receive antenna 313, and the receive antenna 314 shown in FIG. 13, FIG. 16, or FIG. 17. For example, the at least three receive antennas may be the receive antenna 311, the receive antenna 312, the receive antenna 313, and the antenna 321 shown in FIG. 14. For example, the at least three receive antennas may be the receive antenna 1, the receive antenna 2, the receive antenna 3, and the receive antenna 4 shown in FIG. 15.

Optionally, before the first device determines the location information of the one or more electronic devices around the first device, the payment method further includes: The first device advertises a device seek message. The first device receives one or more device seek response messages for the device seek message. The one or more device seek response messages are sent by the one or more electronic devices. The one or more device seek response messages one-to-one correspond to the one or more electronic devices. The one or more device seek response messages include a target device seek response message. The target device seek response message corresponds to a target electronic device in the one or more electronic devices. The target device seek response message includes location information of the target electronic device. The location information of the target electronic device is determined by the target electronic device. The determining location information of one or more electronic devices around the first device includes: The first device determines the location information of the target electronic device based on the target device seek response message.

Optionally, before the first device determines the location information of the one or more electronic devices around the first device, the payment method further includes: The first device displays a payment interface or a checkout interface.

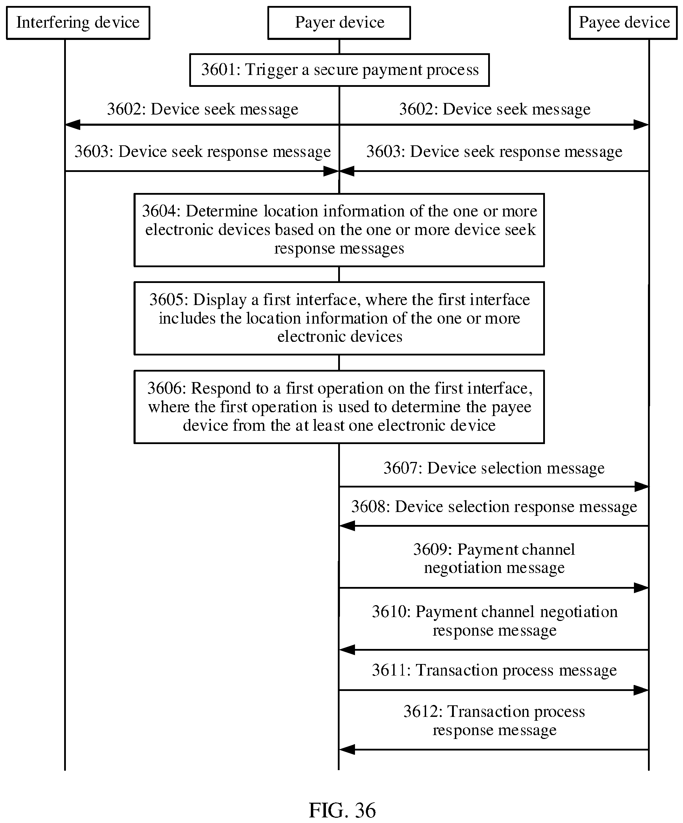

FIG. 36 is a schematic flowchart of a secure payment method according to an embodiment of this application.

3601: A payer device triggers a secure payment process.

For example, the payer device may display a payment interface shown in FIG. 22, FIG. 29, FIG. 30, FIG. 31, or FIG. 32.

3602: The payer device advertises a device seek message.

For example, the device seek message may be the device seek message shown in FIG. 4 or FIG. 5.

Optionally, the device seek message includes a first instruction command word, a first timestamp, a unique identifier of the payer device, a name of the payer device, and a first true random number.

3603: The payer device receives one or more device seek response messages for the device seek message, where the one or more device seek response messages are sent by one or more electronic devices, and the one or more device seek response messages one-to-one correspond to the one or more electronic devices.

For example, the device seek response message may be the device seek response message shown in FIG. 4.

Optionally, the device seek response message includes a second instruction command word, a second timestamp, a unique identifier of the electronic device, a name of the electronic device, and a second true random number.

Optionally, if the payer device does not receive the device seek response message within a first preset time period, the payer device may send a new device seek message.

For example, the first preset time period may be the first preset time period shown in FIG. 5.

Optionally, if the payer device does not receive the device seek response message within a second preset time period, the payer device stops performing the secure payment method. The second preset time period is longer than the first preset time period.

For example, the second preset time period may be the second preset time period shown in FIG. 5.

3604: The payer device determines location information of the one or more electronic devices based on the one or more device seek response messages.

Optionally, the payer device determines the location information by using a UWB module or a BLE module.

Optionally, the UWB module includes at least three receive antennas.

Optionally, the BLE module includes at least three receive antennas.

Optionally, the payer device determines the location information according to a UWB single-sided two-way ranging algorithm and/or an AoA technology.

For detailed description of the AoA technology, refer to the embodiments shown in FIG. 18 to FIG. 21.

Optionally, the location information includes at least one of the following: a distance between the payer device and the electronic device, and an azimuth of the electronic device relative to the payer device.

3605: The payer device displays a target interface, where the target interface includes the location information of the one or more electronic devices.

Optionally, the target interface includes a device orientation diagram and one or more icons one-to-one corresponding to the one or more electronic devices. The location information of the one or more electronic devices one-to-one corresponds to locations of the one or more icons in the device orientation diagram.

Optionally, the target interface further includes one or more pieces of identification information, and the one or more pieces of identification information one-to-one correspond to the one or more electronic devices.

Optionally, the identification information includes a name of a logged-in payee account on the electronic device and/or an icon of the payee account.

Optionally, the target interface further includes identification information of a historical payee account and location information of an electronic device on which the historical payee account is logged in. The historical payee account is a payee account that has performed an amount transaction with the payer device.

Optionally, the historical payee account is currently around the payer device.

Optionally, that the historical payee account is currently around the payer device includes: The payer device receives a device seek response message sent by the historical payee account; or a distance between a current address of the payer device and an address of the historical payee account is less than a preset threshold 1.

Optionally, frequency at which the payer device makes payment to the historical payee account is greater than a preset threshold 2.

Optionally, the target interface further includes the name of the payer device.

Optionally, the target interface further includes current secure payment information.

3606: The payer device responds to a target operation on the target interface, where the target operation is used to determine a payee device from the at least one electronic device.

Optionally, the target operation is a tap operation.

3607: The payer device may send a device selection message to the payee device.

For example, the device selection message may be the device selection message shown in FIG. 24.

Optionally, the device selection message includes a third instruction command word, a third timestamp, the unique identifier of the payer device, and a third true random number.

Optionally, the third instruction command word is a command word of a device selection instruction.

3608: The payer device receives a device selection response message sent by the payee device, where the selection response message is a response to the device selection message.

For example, the device selection response message may be the device selection response message shown in FIG. 24.

Optionally, the device selection response message includes a fourth instruction command word, a fourth timestamp, a unique identifier of the payee device, and a fourth true random number.

Optionally, the fourth instruction command word is a command word of a device selection response instruction.

3609: The payer device sends a payment channel negotiation message to the payee device.

For example, the payment channel negotiation message may be the payment channel negotiation message shown in FIG. 25.

Optionally, the payment channel negotiation message may indicate any one of the following: a communication connection status of the payer device and a communications interface used by the payer device for payment transaction.

Optionally, the communication connection status of the payer device may include an offline communication state or an online communication state.

Optionally, the communications interface used by the payer device for payment transaction includes any one of the following: a UWB communications interface, a BLE communications interface, a Wi-Fi communications interface, an NFC communications interface, and an LTE communications interface.

3610: The payer device receives a payment channel negotiation response message sent by the payee device, where the payment channel negotiation response message is a response to the payment channel negotiation message.

For example, the payment channel negotiation response message may be the payment channel negotiation response message shown in FIG. 25.

Optionally, the payment channel negotiation response message may indicate any one of the following: a communication connection status of the payee device and a communications interface used by the payee device for payment transaction.

Optionally, the communication connection status of the payee device may include an offline communication state or an online communication state.

Optionally, the communications interface used by the payee device for payment transaction includes any one of the following: a UWB communications interface, a BLE communications interface, a Wi-Fi communications interface, an NFC communications interface, and an LTE communications interface.

3611: The payer device sends a transaction process message to the payee device.

For example, the transaction process message may be the transaction process message shown in FIG. 27.

Optionally, the transaction process message indicates any one of the following: a transaction type, account information on the payer device, and a transaction amount.

Optionally, a communications module used by the payer device to send the transaction process message is the same as or different from a communications module used by the payer device to send the payment channel negotiation message.

Optionally, a communications protocol used by the payer device to send the transaction process message is the same as or different from a communications protocol used by the payer device to send the payment channel negotiation message.

3612: The payer device receives a transaction process response message sent by the payee device, where the transaction process response message is a response to the transaction process message.

For example, the transaction process response message may be the transaction process response message shown in FIG. 27.

Optionally, the transaction process response message indicates any one of the following: a transaction type, account information on the payee device, and a transaction amount.

Optionally, each time the payer device receives a message sent by the payee device, the payer device redetermines the location information of the payee device. When the location information of the payee device meets a preset condition, the payer device stops transacting with the payee device.

Optionally, that the location information meets the preset condition includes at least one of the following: A distance between the payer device and the payee device is longer than a first preset threshold, or a variation of an azimuth of the payee device relative to the payer device is greater than a second preset threshold.

Optionally, the payer device supports a half-duplex communications protocol.

Optionally, the payee device supports a half-duplex communications protocol.

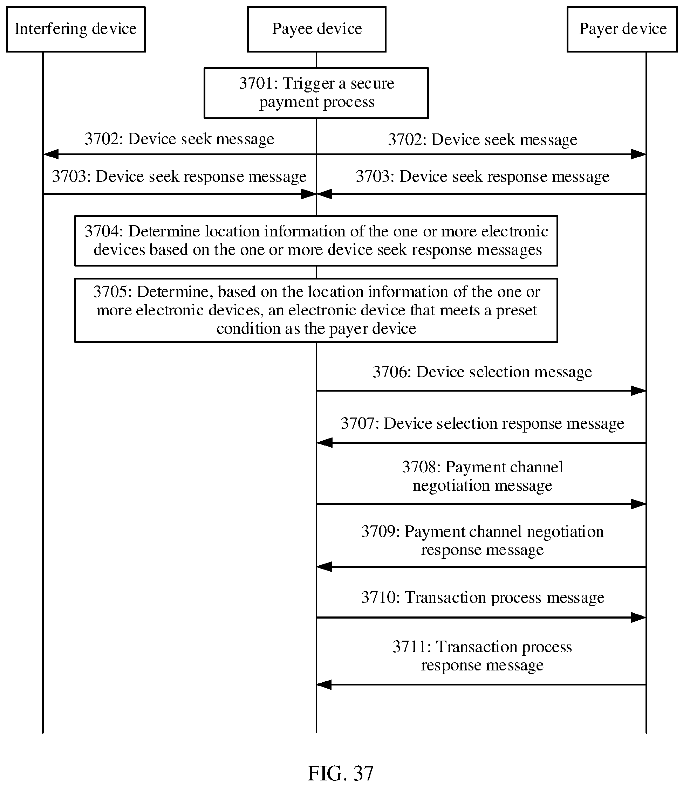

FIG. 37 is a schematic flowchart of a secure payment method according to an embodiment of this application.

3701: A payee device triggers a secure payment process.

For example, the payee device may display a checkout interface shown in FIG. 34.

3702: The payee device advertises a device seek message.

For the device seek message, refer to the device seek message shown in FIG. 4 or FIG. 5.

Optionally, the device seek message includes a first instruction command word, a first timestamp, a unique identifier of the payee device, a name of the payee device, and a first true random number.

3703: The payee device receives one or more device seek response messages for the device seek message, where the one or more device seek response messages are sent by one or more electronic devices, and the one or more device seek response messages one-to-one correspond to the one or more electronic devices.

For the device seek response message, refer to the device seek response message shown in FIG. 4.

Optionally, the device seek response message includes a second instruction command word, a second timestamp, a unique identifier of the electronic device, a name of the electronic device, and a second true random number.

Optionally, if the payee device does not receive the device seek response message within a first preset time period, the payee device may send a new device seek message.

For the first preset time period, refer to the first preset time period shown in FIG. 5.

Optionally, if the payee device does not receive the device seek response message within a second preset time period, the payee device stops performing the secure payment method. The second preset time period is longer than the first preset time period.

For the second preset time period, refer to the second preset time period shown in FIG. 5.

3704: The payee device determines location information of the one or more electronic devices based on the one or more device seek response messages.

Optionally, the payee device determines the location information by using a UWB module or a BLE module.

Optionally, the UWB module includes at least three receive antennas.

Optionally, the BLE module includes at least three receive antennas.

Optionally, the payee device determines the location information according to a UWB single-sided two-way ranging algorithm and/or an AoA technology.

Optionally, the location information includes at least one of the following: a distance between the payee device and the electronic device, and an azimuth of the electronic device relative to the payee device.

3705: The payee device determines, based on the location information of the one or more electronic devices, an electronic device that meets a preset condition as the payer device.

Optionally, the preset condition includes at least one of the following: a distance to the payer device is the shortest; and an electronic device is in a target orientation of the payer device.

Optionally, the target orientation includes direct front.

3706: The payee device may send a device selection message to the payer device.

For the device selection message, refer to the device selection message shown in FIG. 24.

Optionally, the device selection message includes a third instruction command word, a third timestamp, a unique identifier of the payee device, and a third true random number.

Optionally, the third instruction command word is a command word of a device selection instruction.

3707: The payee device receives a device selection response message sent by the payer device, where the selection response message is a response to the device selection message.

For the device selection response message, refer to the device selection response message shown in FIG. 24.

Optionally, the device selection response message includes a fourth instruction command word, a fourth timestamp, a unique identifier of the payer device, and a fourth true random number.

Optionally, the fourth instruction command word is a command word of a device selection response instruction.

3708: The payee device sends a payment channel negotiation message to the payer device.

For the payment channel negotiation message, refer to the payment channel negotiation message shown in FIG. 25.

Optionally, the payment channel negotiation message may indicate any one of the following: a communication connection status of the payee device and a communications interface used by the payee device for payment transaction.

Optionally, the communication connection status of the payee device may include an offline communication state or an online communication state.

Optionally, the communications interface used by the payee device for payment transaction includes any one of the following: a UWB communications interface, a BLE communications interface, a Wi-Fi communications interface, an NFC communications interface, and an LTE communications interface.

3709: The payee device receives a payment channel negotiation response message sent by the payer device, where the payment channel negotiation response message is a response to the payment channel negotiation message.

For the payment channel negotiation response message, refer to the payment channel negotiation response message shown in FIG. 25.

Optionally, the payment channel negotiation response message may indicate any one of the following: a communication connection status of the payer device and a communications interface used by the payer device for payment transaction.

Optionally, the communication connection status of the payer device may include an offline communication state or an online communication state.

Optionally, the communications interface used by the payer device for payment transaction includes any one of the following: a UWB communications interface, a BLE communications interface, a Wi-Fi communications interface, an NFC communications interface, and an LTE communications interface.

3710: The payee device sends a transaction process message to the payer device.

For the transaction process message, refer to the transaction process message shown in FIG. 27.

Optionally, the transaction process message indicates any one of the following: a transaction type, account information on the payee device, and a transaction amount.

Optionally, a communications module used by the payee device to send the transaction process message is the same as or different from a communications module used by the payee device to send the payment channel negotiation response message.

Optionally, a communications protocol used by the payee device to send the transaction process message is the same as or different from a communications protocol used by the payee device to send the payment channel negotiation response message.

3711: The payee device receives a transaction process response message sent by the payer device, where the transaction process response message is a response to the transaction process message.

For the transaction process response message, refer to the transaction process response message shown in FIG. 27.

Optionally, the transaction process response message indicates any one of the following: a transaction type, account information on the payer device, and a transaction amount.

Optionally, each time the payee device receives a message sent by the payer device, the payee device redetermines the location information of the payer device. When the location information meets a preset condition, the payee device stops transacting with the payer device.

Optionally, that the location information meets the preset condition includes at least one of the following: The distance between the payee device and the payer device is longer than a first preset threshold, or a variation of the azimuth of the payer device relative to the payee device is greater than a second preset threshold.

Optionally, the payee device supports a half-duplex communications protocol.

Optionally, the payer device supports a half-duplex communications protocol.

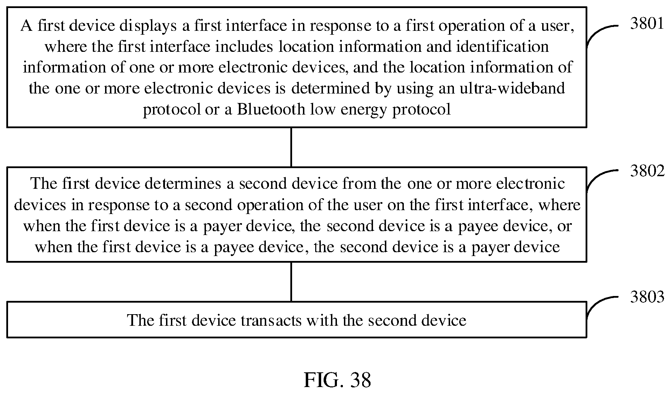

FIG. 38 is a schematic flowchart of a secure payment method according to an embodiment of this application.

3801: A first device displays a first interface in response to a first operation of a user, where the first interface includes location information and identification information of one or more electronic devices, and the location information of the one or more electronic devices is determined by using an ultra-wideband UWB protocol or a Bluetooth low energy BLE protocol.

3802: The first device determines a second device from the one or more electronic devices in response to a second operation of the user on the first interface, where when the first device is a payer device, the second device is a payee device, or when the first device is a payee device, the second device is a payer device.

3803: The first device transacts with the second device.

Optionally, the first interface includes a device orientation diagram, and the device orientation diagram displays distances between the first device and the one or more electronic devices, and azimuths of the one or more electronic devices relative to the first device.

Optionally, that the first device transacts with the second device includes: The first device displays a third interface. The third interface includes transaction information of the current transaction. The transaction information includes at least one of the following: a payment method, a discount, a payment amount, and identification information of the second device. The first device completes the transaction with the second device in response to a third operation of the user on the third interface.

Optionally, before the first device displays the third interface, the method further includes: The first device sends a transaction process message to the second device, where the transaction process message is used to request the second device to send the transaction information to the first device.

Optionally, before the first device determines the second device from the one or more electronic devices in response to the second operation of the user on the first interface, the method further includes: updating the location information of the one or more electronic devices on the first interface in response to a fourth operation of the user. The fourth operation enables the second device to meet at least one of the following: The second device is in a target orientation of the first device; and a distance between the second device and the first device is the shortest.

Optionally, the target orientation includes direct front.

Optionally, before the first device displays the first interface, the payment method further includes: The first device advertises a device seek message. The first device receives a target device seek response message for the device seek message through at least three receive antennas, where the target device seek response message is sent by a target electronic device in the one or more electronic devices. The first device determines location information of the target electronic device based on a time difference for receiving the target device seek response message by the at least three receive antennas.

Optionally, the payment method further includes: The first device updates location information of the second device; and when the location information of the second device meets a preset condition, the first device stops transacting with the second device.

Optionally, the preset condition includes at least one of the following: A distance between the first device and the second device is longer than a first preset threshold; and a variation of an azimuth of the second device relative to the first device is greater than a second preset threshold.

Optionally, the second operation is a tap operation on the second device.

Optionally, the identification information of the electronic device includes icon information of the electronic device and a name of a logged-in payee account on the electronic device.

Optionally, the first interface is a payment interface or a checkout interface.

Embodiments of this application provide an electronic device. The electronic device may be the electronic device shown in FIG. 1 or FIG. 2. The electronic device includes a processor, a memory, a radio frequency circuit, an antenna, and an input/output apparatus. The processor may be configured to process a communications protocol and communications data, control the electronic device, execute a software program, process data of the software program, and so on. The memory is configured to store the software program and data. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user. It should be noted that some types of electronic devices may have no input/output apparatus.

When data needs to be sent, the processor performs baseband processing on the to-be-sent data, and outputs a baseband signal to the radio frequency circuit. The radio frequency circuit performs radio frequency processing on the baseband signal and then sends a radio frequency signal to the outside in a form of an electromagnetic wave through the antenna. When data is sent to the electronic device, the radio frequency circuit receives a radio frequency signal through the antenna, converts the radio frequency signal into a baseband signal, and outputs the baseband signal to the processor. The processor converts the baseband signal into data, and processes the data. In an actual electronic device product, there may be one or more processors and one or more memories. The memory may also be referred to as a storage medium, a storage device, or the like. The memory may be independent of the processor, or may be integrated with the processor. This is not limited in embodiments of this application.

In embodiments of this application, the antenna and the radio frequency circuit that have a transceiver function may be considered as a transceiver of the electronic device, and the processor that has a processing function may be considered as a processing unit of the electronic device. The transceiver may also be referred to as a transceiver unit, a transceiver, a transceiver apparatus, or the like. The processing unit may also be referred to as a processor, a processing board, a processing module, a processing apparatus, or the like. Optionally, a component that is configured to implement a receiving function in the transceiver may be considered as a receiving unit, and a component that is configured to implement a sending function in the transceiver may be considered as a sending unit. In other words, the transceiver includes the receiving unit and the sending unit. The receiving unit may also be sometimes referred to as a receiver, a receiving circuit, or the like. The sending unit may also be sometimes referred to as a transmitter machine, a transmitter, a transmitting circuit, or the like.

The processor, the memory, and the transceiver communicate with each other through an internal connection path, to transfer a control signal and/or a data signal.

The methods disclosed in embodiments of this application may be performed by a processor or may be implemented by a processor. The processor may be an integrated circuit chip and has a signal processing capability. In an implementation process, the steps in the foregoing methods may be completed by using a hardware integrated logic circuit in the processor or instructions in a form of software.

The foregoing processor in embodiments of this application may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly performed and completed by using a hardware decoding processor, or may be performed and completed by using a combination of hardware and a software module in the decoding processor. The software module may be in a mature storage medium in the art, such as a random access memory (random access memory, RAM), a flash memory, a read-only memory (read-only memory, ROM), a programmable read-only memory, an electrically erasable programmable memory, or a register. The storage medium is in the memory, and the processor reads instructions in the memory and completes the steps in the foregoing methods in combination with hardware of the processor.

An embodiment of this application further provides a chip, and the chip includes a transceiver unit and a processing unit. The transceiver unit may be an input/output circuit or a communications interface. The processing unit is a processor, a microprocessor, or an integrated circuit that is integrated on the chip. The chip may perform the methods on the electronic device side in the foregoing method embodiments.

Embodiments of this application further provide a computer-readable storage medium. The computer-readable storage medium stores instructions, and when the instructions are executed, the methods on the electronic device side in the foregoing method embodiments is performed.

Embodiments of this application further provide a computer program product including instructions. When the instructions are executed, the method on the electronic device side in the foregoing method embodiments is performed.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected depending on actual requirements to achieve the objectives of the solutions in embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A payment method, comprising:

   displaying, by a first device (400), a first interface in response to a first operation of a user, wherein the first interface comprises location information and identification information of one or more electronic devices,;
   determining, by the first device (400), a second device (500) from the one or more electronic devices in response to a second operation of the user on the first interface; and
   transacting, by the first device (400), with the second device (500),
   wherein the location information of the one or more electronic devices is determined by using an ultra-wideband UWB protocol or a Bluetooth low energy BLE protocol; and wherein when the first device (400) is a payer device, the second device (500) is a payee device, or when the first device (400) is a payee device, the second device (500) is a payer device;
   **characterized in that** the payment method further comprises:

   updating, by the first device (400), location information of the second device (500); and
   when the location information of the second device (500) meets a preset condition, stopping, by the first device (400), transacting with the second device (500),
   wherein the preset condition comprises a variation of an azimuth of the second device (500) relative to the first device (400) with time is greater than a second preset threshold

2. The payment method according to claim 1, wherein the first interface comprises a device orientation diagram, and the device orientation diagram displays distances between the first device (400) and the one or more electronic devices (400, 500), and azimuths of the one or more electronic devices relative to the first device (400).

3. The payment method according to claim 1 or 2, wherein the transacting, by the first device (400), with the second device (500) comprises:

displaying, by the first device (400), a third interface, wherein the third interface comprises transaction information of the current transaction, and the transaction information comprises at least one of the following: a payment method, a discount, a payment amount, and identification information of the second device (500); and completing, by the first device (400), the transaction with the second device (500) in response to a third operation of the user on the third interface.

4. The payment method according to claim 3, wherein before the displaying, by the first device (400), a third interface, the method further comprises:
sending, by the first device (400), a transaction process message to the second device (500), wherein the transaction process message is used to request the second device (500) to send the transaction information to the first device (400).

5. The payment method according to any one of claims 1 to 4, before the determining, by the first device (400), a second device (500) from the one or more electronic devices (400, 500) in response to a second operation of the user on the first interface, the method further comprises:
updating the location information of the one or more electronic devices on the first interface in response to a further operation of the user, wherein the further operation enables the second device (500) to meet at least one of the following:

the second device (500) is in a target orientation of the first device (400); and
a distance between the second device (500) and the first device (400) is the shortest.

6. The payment method according to any of the previous claims, wherein the target orientation comprises direct front.

7. The payment method according to any one of claims 1 to 6, wherein before the displaying, by a first device (400), a first interface, the payment method further comprises:

advertising, by the first device (400), a device seek message;
receiving, by the first device (400), a target device seek response message for the device seek message through at least three receive antennas, wherein the target device seek response message is sent by a target electronic device in the one or more electronic devices (400, 500); and
determining, by the first device (400), location information of the target electronic device based on a time difference for receiving the target device seek response message by the at least three receive antennas (311-313).

8. The payment method according to any of the previous claims, wherein the preset condition also comprises:
a distance between the first device (400) and the second device (500) is longer than a first preset threshold

9. The payment method according to any one of claims 1 to 8, wherein the second operation is a tap operation on the second device (500).

10. The payment method according to any one of claims 1 to 9, wherein the identification information of the electronic device comprises icon information of the electronic device and a name of a logged-in payee account on the electronic device.

11. The payment method according to any one of claims 1 to 10, wherein the first interface is a payment interface or a checkout interface.

12. An electronic device (200), comprising:

one or more processors (201), and
one or more memories (202), wherein
the one or more memories (202) store one or more computer programs, the one or more computer programs comprise instructions, and when the instructions are executed by the one or more processors (201), the electronic device (200) is enabled to perform the payment method according to any one of claims 1 to 11.

13. A nonvolatile computer-readable storage medium, comprising computer instructions, wherein when the computer instructions are run on an electronic device (200), the electronic device (200) is enabled to perform the payment method according to any one of claims 1 to 11.

14. A computer program product comprising instructions, wherein when the computer program product is run on an electronic device (200), the electronic device (200) is enabled to perform the payment method according to any one of claims 1 to 11.

**Patentansprüche**

1. Zahlungsverfahren, das umfasst:

   Anzeigen, durch eine erste Vorrichtung (400), einer ersten Schnittstelle als Reaktion auf eine erste Bedienung eines Benutzers, wobei die erste Schnittstelle Standortinformationen und Identifikationsinformationen einer oder mehrerer elektronischer Vorrichtungen umfasst;
   Bestimmen, durch die erste Vorrichtung (400), einer zweiten Vorrichtung (500) aus der einen oder den mehreren elektronischen Vorrichtungen als Reaktion auf eine zweite Bedienung des Benutzers an der ersten Schnittstelle; und
   Durchführen von Transaktionen, durch die erste Vorrichtung (400), mit der zweiten Vorrichtung (500),
   wobei die Standortinformationen der einen oder der mehreren elektronischen Vorrichtungen durch Verwenden eines Ultrabreitband-UWB-Protokolls oder eines Bluetooth-Low-Energy-BLE-Protokolls bestimmt werden; und
   wobei wenn die erste Vorrichtung (400) eine Zahlervorrichtung ist, die zweite Vorrichtung (500) eine Zahlungsempfängervorrichtung ist, oder
   wenn die erste Vorrichtung (400) eine Zahlungsempfängervorrichtung ist, die zweite Vorrichtung (500) eine Zahlervorrichtung ist;
   **dadurch gekennzeichnet, dass** das Zahlungsverfahren ferner umfasst:

   Aktualisieren, durch die erste Vorrichtung (400), von Standortinformationen der zweiten Vorrichtung (500); und
   wenn die Standortinformationen der zweiten Vorrichtung (500) eine voreingestellte Bedingung erfüllen, Stoppen, durch die erste Vorrichtung (400), des Durchführens der Transaktion mit der zweiten Vorrichtung (500),
   wobei die voreingestellte Bedingung umfasst, dass eine Variation eines Azimuts der zweiten Vorrichtung (500) relativ zu der ersten Vorrichtung (400) mit der Zeit größer als ein zweiter voreingestellter Schwellenwert ist.

2. Zahlungsverfahren nach Anspruch 1, wobei die erste Schnittstelle ein Vorrichtungsorientierungsdiagramm umfasst, und das Vorrichtungsorientierungsdiagramm Abstände zwischen der ersten Vorrichtung (400) und der einen oder den mehreren elektronischen Vorrichtungen (400, 500) und Azimute der einen oder der mehreren elektronischen Vorrichtungen relativ zu der ersten Vorrichtung (400) anzeigt.

3. Zahlungsverfahren nach Anspruch 1 oder 2, wobei das Durchführen der Transaktion durch die erste Vorrichtung (400) mit der zweiten Vorrichtung (500) umfasst:

   Anzeigen, durch die erste Vorrichtung (400), einer dritten Schnittstelle, wobei die dritte Schnittstelle Transaktionsinformationen der aktuellen Transaktion umfasst, und die Transaktionsinformationen mindestens eines der Folgenden umfassen: ein Zahlungsverfahren, einen Rabatt, einen Zahlungsbetrag und Identifikationsinformationen der zweiten Vorrichtung (500); und
   Abschließen, durch die erste Vorrichtung (400), der Transaktion mit der zweiten Vorrichtung (500) als Reaktion auf eine dritte Bedienung des Benutzers an der dritten Schnittstelle.

4. Zahlungsverfahren nach Anspruch 3, wobei vor dem Anzeigen, durch die erste Vorrichtung (400), einer dritten Schnittstelle, das Verfahren ferner umfasst:
   Senden, durch die erste Vorrichtung (400), einer Transaktionsprozessnachricht an die zweite Vorrichtung (500), wobei die Transaktionsprozessnachricht verwendet wird, um die zweite Vorrichtung (500) anzufordern, die Transaktionsinformationen an die erste Vorrichtung (400) zu senden.

5. Zahlungsverfahren nach einem der Ansprüche 1 bis 4, wobei vor dem Bestimmen, durch die erste Vorrichtung (400), einer zweiten Vorrichtung (500) aus der einen oder den mehreren elektronischen Vorrichtungen (400, 500) als Reaktion auf eine zweite Bedienung des Benutzers an der ersten Schnittstelle, das Verfahren ferner umfasst: Aktualisieren der Standortinformationen der einen oder der mehreren elektronischen Vorrichtungen an der ersten Schnittstelle als Reaktion auf eine weitere Bedienung des Benutzers, wobei die weitere Bedienung die zweite Vorrichtung (500) aktiviert, um mindestens eines der Folgenden zu erfüllen:

die zweite Vorrichtung (500) ist in einer Zielorientierung der ersten Vorrichtung (400); und
ein Abstand zwischen der zweiten Vorrichtung (500) und der ersten Vorrichtung (400) ist am kürzesten.

6. Zahlungsverfahren nach einem der vorstehenden Ansprüche, wobei die Zielorientierung direkt frontal umfasst.

7. Zahlungsverfahren nach einem der Ansprüche 1 bis 6, wobei vor dem Anzeigen, durch eine erste Vorrichtung (400), einer ersten Schnittstelle, das Zahlungsverfahren ferner umfasst:

Bekanntgeben, durch die erste Vorrichtung (400), einer Vorrichtungssuchnachricht; Empfangen, durch die erste Vorrichtung (400), einer
Zielvorrichtungssuchantwortnachricht für die Vorrichtungssuchnachricht über mindestens drei Empfangsantennen, wobei die Zielvorrichtungssuchantwortnachricht durch eine elektronische Zielvorrichtung in der einen oder den mehreren elektronischen Vorrichtungen (400, 500) gesendet wird; und
Bestimmen, durch die erste Vorrichtung (400), von Standortinformationen der elektronischen Zielvorrichtung basierend auf einer Zeitdifferenz zum Empfangen der Zielvorrichtungssuchantwortnachricht durch die mindestens drei Empfangsantennen (311-313).

8. Zahlungsverfahren nach einem der vorstehenden Ansprüche, wobei die voreingestellte Bedingung auch umfasst: ein Abstand zwischen der ersten Vorrichtung (400) und der zweiten Vorrichtung (500) ist länger als ein erster voreingestellter Schwellenwert.

9. Zahlungsverfahren nach einem der Ansprüche 1 bis 8, wobei die zweite Bedienung eine Tippbedienung auf der zweiten Vorrichtung (500) ist.

10. Zahlungsverfahren nach einem der Ansprüche 1 bis 9, wobei die Identifikationsinformationen der elektronischen Vorrichtung Symbolinformationen der elektronischen Vorrichtung und einen Namen eines angemeldeten Zahlungsempfängerkontos auf der elektronischen Vorrichtung umfassen.

11. Zahlungsverfahren nach einem der Ansprüche 1 bis 10, wobei die erste Schnittstelle eine Zahlungsschnittstelle oder eine Checkout-Schnittstelle ist.

12. Elektronische Vorrichtung (200), die umfasst:

einen oder mehrere Prozessoren (201) und
einen oder mehrere Speicher (202), wobei
der eine oder die mehreren Speicher (202) ein oder mehrere Computerprogramme speichern, das eine oder die mehreren Computerprogramme Anweisungen umfassen und wenn die Anweisungen durch den einen oder die mehreren Prozessoren (201) ausgeführt werden, die elektronische Vorrichtung (200) aktiviert wird, um das Zahlungsverfahren nach einem der Ansprüche 1 bis 11 auszuüben.

13. Nichtflüchtiges computerlesbares Speicherungsmedium, das Computeranweisungen umfasst, wobei, wenn die Computeranweisungen auf einer elektronischen Vorrichtung (200) laufen gelassen werden, die elektronische Vorrichtung (200) aktiviert wird, um das Zahlungsverfahren nach einem der Ansprüche 1 bis 11 durchzuführen.

14. Computerprogrammprodukt, das Anweisungen umfasst, wobei, wenn das Computerprogrammprodukt auf einer elektronischen Vorrichtung (200) laufen gelassen wird, die elektronische Vorrichtung (200) aktiviert wird, um das Zahlungsverfahren nach einem der Ansprüche 1 bis 11 durchzuführen.

**Revendications**

1. Procédé de paiement, comprenant :

l'affichage, par un premier dispositif (400), d'une première interface en réponse à une première opération d'un utilisateur, dans lequel la première interface comprend des informations d'emplacement et des informations d'identification d'un ou de plusieurs dispositifs électroniques ;
la détermination, par le premier dispositif (400), d'un second dispositif (500) parmi le ou les dispositifs électroniques en réponse à une deuxième opération de l'utilisateur sur la première interface ; et
la transaction, par le premier dispositif (400), avec le second dispositif (500),
dans lequel les informations d'emplacement du ou des dispositifs électroniques sont déterminées en utilisant un protocole à bande ultralarge UWB ou un protocole Bluetooth basse consommation BLE ; et dans lequel
lorsque le premier dispositif (400) est un dispositif payeur, le second dispositif (500) est un dispositif récepteur de paiement, ou
lorsque le premier dispositif (400) est un dispositif récepteur de paiement, le second dispositif (500) est un dispositif payeur ;
**caractérisé en ce que** le procédé de paiement comprend en outre :

la mise à jour, par le premier dispositif (400), d'informations d'emplacement du second dispositif (500) ; et
lorsque les informations d'emplacement du second dispositif (500) satisfont à une condition prédéfinie, l'arrêt, par le premier dispositif (400), de la transaction avec le second dispositif (500),
dans lequel la condition prédéfinie comprend une variation d'un azimut du second dispositif (500) par rapport au premier dispositif (400) avec le temps supérieure à un second seuil prédéfini.

2. Procédé de paiement selon la revendication 1, dans lequel la première interface comprend un diagramme d'orientation de dispositif, et le diagramme d'orientation de dispositif affiche des distances entre le premier dispositif (400) et le ou les dispositifs électroniques (400, 500), et des azimuts du ou des dispositifs électroniques par rapport au premier dispositif (400).

3. Procédé de paiement selon la revendication 1 ou 2, dans lequel la transaction, par le premier dispositif (400), avec le second dispositif (500) comprend :
l'affichage, par le premier dispositif (400), d'une troisième interface, dans lequel la troisième interface comprend des informations de transaction de la transaction en cours, et les informations de transaction comprennent au moins l'un parmi ce qui suit :

un mode de paiement, une remise, un montant de paiement, et des informations d'identification du second dispositif (500) ; et
l'achèvement, par le premier dispositif (400), de la transaction avec le second dispositif (500) en réponse à une troisième opération de l'utilisateur sur la troisième interface.

4. Procédé de paiement selon la revendication 3, dans lequel avant l'affichage, par le premier dispositif électronique (400), d'une troisième interface, le procédé comprend en outre :
l'envoi, par le premier dispositif (400), d'un message de processus de transaction au second dispositif (500), dans lequel le message de processus de transaction est utilisé pour demander au second dispositif (500) d'envoyer les informations de transaction au premier dispositif (400).

5. Procédé de paiement selon l'une quelconque des revendications 1 à 4, avant la détermination, par le premier dispositif (400), d'un second dispositif (500) parmi le ou les dispositifs électroniques (400, 500) en réponse à une deuxième opération de l'utilisateur sur la première interface, le procédé comprend en outre :
la mise à jour des informations d'emplacement du ou des dispositifs électroniques sur la première interface en réponse à une opération supplémentaire de l'utilisateur, dans lequel l'opération supplémentaire active le second dispositif (500) pour satisfaire à au moins l'un de ce qui suit :

le second dispositif (500) est dans une orientation cible du premier dispositif (400) ; et
une distance entre le second dispositif (500) et le premier dispositif (400) est la plus courte.

6. Procédé de paiement selon l'une quelconque des revendications précédentes, dans lequel l'orientation cible comprend l'avant direct.

**7.** Procédé de paiement selon l'une quelconque des revendications 1 à 6, dans lequel avant l'affichage, par un premier dispositif (400), d'une première interface, le procédé de paiement comprend en outre :

la diffusion, par le premier dispositif (400), d'un message de recherche de dispositif ;

la réception, par le premier dispositif (400), d'un message de réponse de recherche de dispositif cible pour le message de recherche de dispositif par l'intermédiaire d'au moins trois antennes de réception, dans lequel le message de réponse de recherche de dispositif cible est envoyé par un dispositif électronique cible dans le ou les dispositifs électroniques (400, 500) ; et

la détermination, par le premier dispositif (400), d'informations d'emplacement du dispositif électronique cible sur la base d'une différence de temps pour la réception du message de réponse de recherche de dispositif cible par les au moins trois antennes de réception (311-313).

**8.** Procédé de paiement selon l'une quelconque des revendications précédentes, dans lequel la condition prédéfinie comprend également :

une distance entre le premier dispositif (400) et le second dispositif (500) est supérieure à un premier seuil prédéfini.

**9.** Procédé de paiement selon l'une quelconque des revendications 1 à 8, dans lequel la deuxième opération est une opération de tapotement sur le second dispositif (500).

**10.** Procédé de paiement selon l'une quelconque des revendications 1 à 9, dans lequel les informations d'identification du dispositif électronique comprennent des informations d'icône du dispositif électronique et un nom d'un compte de récepteur de paiement identifié sur le dispositif électronique.

**11.** Procédé de paiement selon l'une quelconque des revendications 1 à 10, dans lequel la première interface est une interface de paiement ou une interface de passage au paiement.

**12.** Dispositif électronique (200), comprenant :

un ou plusieurs processeurs (201), et

une ou plusieurs mémoires (202), dans lequel

la ou les mémoires (202) stockent un ou plusieurs programmes informatiques, le ou les programmes informatiques comprennent des instructions, et lorsque les instructions sont exécutées par le ou les processeurs (201), le dispositif électronique (202) est activé pour effectuer le procédé de paiement selon l'une quelconque des revendications 1 à 11.

**13.** Support de stockage non volatile lisible par ordinateur, comprenant des instructions informatiques, dans lequel, lorsque les instructions informatiques sont exécutées sur un dispositif électronique (200), le dispositif électronique (200) est activé pour effectuer le procédé de paiement selon l'une quelconque des revendications 1 à 11.

**14.** Produit-programme d'ordinateur comprenant des instructions, dans lequel, lorsque le produit-programme d'ordinateur est exécuté sur un dispositif électronique (200), le dispositif électronique (200) est activé pour effectuer le procédé de paiement selon l'une quelconque des revendications 1 à 11.

Terminal 100

Antenna 1                                          Antenna 2

| Mobile communications module<br>2G/3G/4G/5G<br>[150] | Wireless communications module<br>BT/WLAN/GNSS/NFC/IR/FM<br>[160] |

| Speaker [170A] | | Sensor module [180] |
| Receiver [170B] | Audio module [170] | Pressure sensor [180A] |
| Microphone [170C] | | Gyroscope sensor [180B] |
| Headset jack [170D] | | Barometric pressure sensor [180C] |

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

USB interface [130]

Charging input

Charging management module [140]

Power management module [141]

Battery [142]

Bone conduction sensor [180M]

FIG. 1

Electronic device 200

FIG. 2

FIG. 3

FIG. 4

Second preset time period

| First preset time period 1 | First preset time period 2 | ... | First preset time period s |

Payer device

Device seek message 1

Device seek message 2

Device seek message s

## FIG. 5

Wireless communications module 300

Receive antenna 311

Receive antenna 312

Receive antenna 313

Wireless communications chip 310

Transmit antenna 320

## FIG. 6

Wireless communications module 300

Receive antenna 311

Receive antenna 312

Wireless communications chip 310

Antenna 321

FIG. 7

FIG. 8

Receive
antenna 311

Receive
antenna 312

Receive antenna
313

Transmit antenna
320

Payer device
400

Electronic device
500

Transmit antenna
520

Receive antenna
510

FIG. 9

Receive antenna
311

Receive antenna
312

Receive antenna
313

Transmit antenna
320

Payer device
400

Transmit antenna
320

Electronic
device 500

Receive antenna
313

Receive antenna
312

Receive antenna
311

FIG. 10

FIG. 11

FIG. 12

FIG. 13

FIG. 14

FIG. 15

FIG. 16

EP 4 047 537 B1

FIG. 17

53

FIG. 18

Antenna 0 (ANT0)     Antenna 1 (ANT1)     Antenna 2 (ANT2)

| Radio frequency channel 0 | Radio frequency channel 1 | Radio frequency channel 2 |
|---|---|---|
| Extractor (Extractor) 1704A | Extractor (Extractor) 1704B | Extractor (Extractor) 1704C |
| Front end module (FEM) 1703A | Front end module (FEM) 1703B | Front end module (FEM) 1703C |

Single pole three throw switch (SP3T) 1702

Bluetooth (BT) chip 1701

FIG. 19

Bluetooth chip system 1800

FIG. 20

FIG. 21

| Payer device name | XXX > |
|---|---|
| Payment type | Consumption > |

**Historical payee account** ⟳

| Beauty salon A | Distance: a cm |
|---|---|
| Convenience store B | Distance: b cm |
| Chinese fast food restaurant C | Distance: c cm |

**Nearby payee account** ⟳

| Pet store D | Distance: d cm |
|---|---|
| Hot pot restaurant E | Distance: e cm |
| Barbecue restaurant F | Distance: f cm |
| Personal account G | Distance: g cm |
| Clothing store H | Distance: h cm |

ⓘ
Help

◁  ○  □

FIG. 22

| | |
|---|---|
| Payer device name | XXX 〉 |
| Payment type | Consumption 〉 |

Historical payee account

| | |
|---|---|
| Beauty salon A | Distance: a cm |
| Convenience store B | Distance: b cm |

〈 Payment                                    Cancel

| | |
|---|---|
| Payee account | Beauty salon A |
| Payment method | Credit card (1234) of XX Bank |
| Discount | Random instant discount |
| To be paid | 50.00 CNY |

Pay now

FIG. 23

Payer device

Device selection
response message

Device selection message

Payee device

## FIG. 24

Payer device

Payment channel
negotiation
response message 1

Payment channel
negotiation
message 1

Payment channel
negotiation
message m

Payment channel
negotiation
response message m

...

Payee device

## FIG. 25

| Payer device 400 | Payee device 600 |
|---|---|
| First application | Second application |
| First main control module | Second main control module |
| First wireless communications module | Second wireless communications module |

## FIG. 26

| Payer device 400 | | Payee device 600 | |
|---|---|---|---|
| First application | First wireless communications module | Second wireless communications module | Second application |
| First main control module | Third wireless communications module | Fourth wireless communications module | Second main control module |
| First security module | First power module | Second power module | Second security module |

FIG. 27

Payer device

Transaction process message 1    Transaction process response message 1    Transaction process message s    Transaction process response message s

...

Payee device

FIG. 28

FIG. 29

FIG. 30

FIG. 31

FIG. 32

FIG. 33

| Cola | Price: ¥3.00 Quantity: ⊕ 1 ⊕ |
| Fries | Price: ¥5.00 Quantity: ⊕ 1 ⊕ |
| Towel | Price: ¥20.00 Quantity: ⊕ 1 ⊕ |

Total: ¥28.00

Open the mobile payment page and face the self-checkout

FIG. 34

A first device determines location information of one or more electronic devices around the first device, where the location information of the one or more electronic devices is used to determine a second device from the at least one electronic device, and when the first device is a payer device, the second device is a payee device, or when the first device is a payee device, the second device is a payer device — 3501

The first device transacts with the second device — 3502

FIG. 35

| Interfering device | Payer device | Payee device |
|---|---|---|

3601: Trigger a secure payment process

3602: Device seek message          3602: Device seek message

3603: Device seek response message          3603: Device seek response message

3604: Determine location information of the one or more electronic devices based on the one or more device seek response messages

3605: Display a first interface, where the first interface includes the location information of the one or more electronic devices

3606: Respond to a first operation on the first interface, where the first operation is used to determine the payee device from the at least one electronic device

3607: Device selection message

3608: Device selection response message

3609: Payment channel negotiation message

3610: Payment channel negotiation response message

3611: Transaction process message

3612: Transaction process response message

FIG. 36

FIG. 37

A first device displays a first interface in response to a first operation of a user, where the first interface includes location information and identification information of one or more electronic devices, and the location information of the one or more electronic devices is determined by using an ultra-wideband protocol or a Bluetooth low energy protocol — 3801

The first device determines a second device from the one or more electronic devices in response to a second operation of the user on the first interface, where when the first device is a payer device, the second device is a payee device, or when the first device is a payee device, the second device is a payer device — 3802

The first device transacts with the second device — 3803

FIG. 38

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911167725
- CN 202010632442
- KR 101809748 B1
- US 2016112839 A1
- US 2019317177 A1